# EUROPÄISCHE PATENTSCHRIFT

(11) **EP 3 888 502 B1**
(45) Veröffentlichungstag und Bekanntmachung des Hinweises auf die Patenterteilung: **12.11.2025**
(21) Anmeldenummer: 21161449.0
(22) Anmeldetag: 09.03.2021
(51) Int. Cl.: A47F 10/06, A47L 15/00

(54) **THEKENSYSTEM MIT SPÜLMASCHINE**
COUNTER SYSTEM WITH DISHWASHER
SYSTÈME DE COMPTOIR COMPRENANT UN LAVE-VAISSELLE

(30) Priorität: 31.03.2020 DE 102020108881
(43) Veröffentlichungstag der Anmeldung: 06.10.2021
(73) Patentinhaber: Illinois Tool Works Inc., Glenview, IL 60025 (US)
(72) Erfinder: DISCH, Harald, Glenview, Illinois 60025 (US); SCHREMPP, Martin, Glenview, Illinois 60025 (US); BOLDT, Adrian, Glenview, Illinois 60025 (US); NEWCOMER, Jeffrey R., Glenview, Illinois 60025 (US); HIPP, Joel, Glenview, Illinois 60025 (US)
(74) Vertreter: Meissner Bolte Partnerschaft mbB

(56) Entgegenhaltungen:
- EP-A2- 1 532 916
- CA-A- 890 572
- JP-A- 2002 209 691
- KR-A- 20040 087 763
- US-A- 3 886 959

## Beschreibung

Die vorliegende Erfindung betrifft allgemein ein neuartiges Thekenkonzept, welches ausgebildet ist, sowohl in ökonomischer als auch in ökologischer Hinsicht optimal Lebensmittel zubereiten und verkaufen zu können.

Im Einzelnen betrifft die vorliegende Erfindung ein neuartiges Thekensystem zur Übergabe von insbesondere zumindest teilweise unverpackten Lebensmitteln. Die Erfindung betrifft ferner ein Verfahren zum Aufnehmen von kundenspezifischen und insbesondere kundenindividualisierten Bestellungen bei einem Thekensystem.

Thekensysteme der hierin berücksichtigten Art sind Thekensysteme zum Präsentieren, Zubereiten und/oder Verkaufen von Lebensmitteln, insbesondere von zumindest teilweise unverpackten Lebensmitteln.

Unter dem hierin verwendeten Begriff "Lebensmittel" sind allgemein Substanzen zu verstehen, die konsumiert werden, um den menschlichen Körper zu ernähren. Der Begriff "Lebensmittel" umfasst als Oberbegriff sowohl das Trinkwasser als auch die Nahrungsmittel. Trinkwasser besteht aus Wasser und darin gelösten Mineralstoffen. Im Unterschied zu Trinkwasser bestehen Nahrungsmittel im Wesentlichen aus den Makronährstoffen - dies sind die Kohlenhydrate, die Lipide (Fette) und die Proteine - und führen daher den Menschen chemisch gebundene Energie zu. Zusätzlich sind Mikronährstoffe als Mengen- und Spurenelemente wesentliche Bestandteile von Nahrungsmitteln.

Eine lebensmittelrechtliche Definition liefert die Verordnung (EG) Nr. 178/2002 (Lebensmittelbasisverordnung) im Art. 2 zum Lebensmittelrecht. Demnach sind im Sinne dieser Verordnung "Lebensmittel" alle Stoffe oder Erzeugnisse, die dazu bestimmt sind oder von denen nach vernünftigem Ermessen erwartet werden kann, dass sie in verarbeitetem, teilweise verarbeitetem oder unverarbeitetem Zustand von Menschen aufgenommen werden.

Bisherige Thekensysteme, insbesondere solche, welche im Nahrungsmittel-Einzelhandel und in der Gastronomie verwendet werden, dienen dazu, dem Kunden Nahrungsmittel und Speisen zu präsentieren. In Abhängigkeit von der präsentierten Ware weisen Thekensysteme üblicherweise Einrichtungen zum Kühlen oder Warmhalten des präsentierten Guts auf, und je nachdem, ob die Nahrungsmittel selbst verpackt oder lose sind, sind Einrichtungen wie Wannen, Tellerhalterungen oder einfache Ablageflächen vorgesehen. Wenn der Kunde aus dem Präsentierten nur auswählen soll, gibt es Vitrinenaufsätze, hinter denen die Nahrungsmittel nur vom Personal auf der anderen Seite der Theke erreichbar sind.

Werden zumindest teilweise unverpackte Lebensmittel in derartigen Thekensystemen dem Kunden bzw. potentiellen Kunden präsentiert, ist es üblich, nach einer entsprechenden Wahl des Kunden die zumindest teilweise unverpackten Lebensmittel in Einweggeschirr, insbesondere in Einweggeschirr aus Kunststoff, dem Kunden zu übergeben. Als Beispiel hierfür sind Kaffeeshops genannt, bei denen es üblich ist, eine von dem Kunden ausgewählte Kaffeespezialität dem Kunden in einem sogenannten "Coffee-To-Go"-Becher zu Übergeben. Aus den Patentdokumente US3886959A und CA890572A sind Thekensystemen mit Spüllmaschine bekannt.

Aufgrund der enormen Menge an Plastikmüll, die tagtäglich durch Einweggeschirr anfällt, besteht ein Bestreben danach, die Menge des insbesondere im Thekenbetrieb anfallenden Einweggeschirrs zu reduzieren.

Ein Ansatz, die Ökobilanz herkömmlicher Thekensysteme zu verbessern, besteht darin, Einweggeschirr, beispielsweise "Coffee-To-Go"-Einwegbecher zu verwenden, welche recyclebar sind. In diesem Zusammenhang ist beispielsweise Einweggeschirr aus Zelluloseacetat oder aus sogenanntem oxo-abbaubaren Kunststoff bekannt.

Das Problem bei derartigem Einweggeschirr ist jedoch darin zu sehen, dass sich der oxo-abbaubare Kunststoff nur unter bestimmten definierten Bedingungen zersetzen kann, wobei diese bestimmten Bedingungen in der Regel beim Recyceln des Einweggeschirrs aus oxo-abbaubaren Kunststoff nicht gegeben sind. Als Folge hiervon zerfällt das Material des Einweggeschirrs in Mikroplastik und kann die Umwelt und Gesundheit weiterhin belasten.

Darüber hinaus ist die Herstellung von Einweggeschirr aus oxo-abbaubaren Kunststoff relativ aufwendig und belastet von daher auch so die Ökobilanz.

Da die Recyclingwahrscheinlichkeit von bekanntem Mehrweggeschirr aus sogenanntem abbaubaren Material, wie beispielsweise aus oxo-abbaubaren Kunststoff, sehr gering ist, ist die Ökobilanz bei der Zubereitung und Übergabe von insbesondere teilweise unverpackten Lebensmitteln nur dann wirksam verbesserbar, wenn anstelle von Einweggeschirr bei der Übergabe der Lebensmittel Mehrweggeschirr verwendet wird.

Angebote zur (Wieder-)Befüllung mitgebrachter, kundeneigener Mehrwegbecher mit Heißgetränken zur Mitnahme ("Coffee-To-Go") sind in Betriebsstätten der Gastronomie, Systemgastronomie, Gemeinschaftsverpflegung und im Einzelhandel grundsätzlich möglich, sofern der jeweils verantwortliche Lebensmittelunternehmer garantieren kann, dass die einschlägigen allgemeinen Hygienevorschriften erfüllt sind, wie beispielsweise die in Art. 3 der Verordnung (EG) Nr. 852/2004 festgelegten Hygienevorschriften.

Insbesondere ist der Lebensmittelunternehmer bei einer (Wieder-)Befüllung mitgebrachter, kundeneigener Mehrwegbehälter, wie beispielsweise Mehrwegbecher, dafür verantwortlich, dass der Mehrwegbehälter als ein sicher anerkanntes Lebensmittelkontaktmaterial angesehen werden kann und die einschlägigen allgemeinen Hygienevorschriften erfüllt. Als ein Beispiel für die Kriterien eines als sicher anerkannten Lebensmittelkontaktmaterials seien die Regelungen in Art. 3 der Verordnung (EG) Nr. 1935/2004 genannt.

Beispielsweise beim Umgang mit kundeneigenen Bechern zur Abgabe von Heißgetränken in Bedienung oder Selbstbedienung beschränkt sich die Verantwortung des Lebensmittelunternehmers zwar "nur" auf die einwandfreie Beschaffenheit des Lebensmittels bis zum Einfüllvorgang. Da das Behältnis Kundeneigentum ist und auf explizite Veranlassung des Kunden befüllt wird, also nicht vom Lebensmittelunternehmer in Verkehr gebracht wird, kann dem Unternehmer - zumindest dem Prinzip nach - keine Verantwortung für die Eignung und Beschaffenheit des Mehrwegbehälters, wie beispielsweise Bechers, zugerechnet werden.

Allerdings hat der Lebensmittelunternehmer vollumfänglich die Verantwortung für hygienisch einwandfreie betriebliche Prozesse. Er hat durch geeignete Maßnahmen dafür Sorge zu tragen, dass beim Herstellen, wie beispielsweise beim Brüh- und Befüllvorgang bei Heißgetränken, das Risiko der Kontamination des Umfelds oder anderer Lebensmittel durch den kundeneigenen Becher beherrscht und minimiert wird. Dies gilt sowohl für die Abgabeformen mit Bedienung (Service) als auch für Einrichtungen mit Selbstbedienung.

Aufgrund der individuellen räumlichen Situation und unterschiedlicher Verfahren in den Betrieben können die Vorkehrungen zur Kontaminationsvermeidung und Risikominimierung bei der Befüllung mitgebrachter Behälter mit Lebensmitteln, wie beispielsweise bei der Befüllung mitgebrachter Becher mit Heißgetränken, variieren. Es obliegt dem verantwortlichen Unternehmer für die jeweilige Abgabeform (Bedienung oder Selbstbedienung) die hygienischen Risiken einzuschätzen und eine Risikoabwägung vorzunehmen.

Hierbei ist zu berücksichtigen, dass keine kundeneigenen Behälter in betriebliche Bereiche gelangen dürfen, in denen offen mit leicht verderblichen Lebensmittel umgegangen wird. Die Handhabung kundeneigener Behälter, wie beispielsweise Becher, durch das Bedienpersonal "hinter der Theke" ist grundsätzlich zu vermeiden. Optimal ist die Nutzung von Umfüllgefäßen oder Becherhaltern bzw. Tabletts für die Kundenbecher, so dass diese den Theken-/Tresenbereich nicht verlassen bzw. überschreiten und dadurch nicht mit betrieblichen Einrichtungen, wie beispielsweise der Kaffeemaschine, in Berührung kommen.

Sind hingegen kundeneigene Behälter, wie beispielsweise Becher für Heißgetränke, augenscheinlich nicht ausreichend sauber oder erscheinen ungeeignet für die Befüllung, so ist der Kunde darauf hinzuweisen, auch wenn der Zustand des Bechers nicht im Verantwortungsbereich des Unternehmens liegt. Im Einzelfall entscheidet letztendlich der Unternehmer bzw. das ermächtigte Personal über die Befüllung auf Kundenwunsch. Sollte von einem offensichtlich verschmutzten Mehrwegbehälter des Kunden das Risiko der Umfeld-Kontamination ausgehen, da für das Befüllen der Kontakt mit betrieblichen Einrichtungen unvermeidbar ist, muss die Befüllung vorsorglich und aus Verantwortung für die betriebliche Hygiene konsequent abgelehnt werden.

Diese lebensmittelhygienischen Vorschriften beim Umgang mit kundeneigenen Behältern, wie beispielsweise kundeneigenen Bechern zur Abgabe von Heißgetränken in Bedienung oder Selbstbedienung, führen dazu, dass der Lebensmittelunternehmer grundsätzlich ein Rest-Risiko trägt. Dies wiederum wirkt sich negativ auf die Einführung von Mehrweggeschirr insbesondere bei Lebensmittelunternehmer-Ketten, wie beispielsweise Kaffeeshops, aus, da bei derartigen Lebensmittelunternehmer-Ketten eine Risikoanalyse und Abwägung vor Ort nicht oder nur mit hohem Aufwand wirksam umsetzbar ist.

Hierbei ist ferner zu berücksichtigen, dass insbesondere bei weltweit agierenden Lebensmittelunternehmer-Ketten die örtlich geltende Hygienepraxis unterschiedlich sein kann.

Der vorliegenden Erfindung liegt die Problemstellung zugrunde, dass bisherige Thekensysteme, wie sie beispielsweise in Betriebsstätten der Gastronomie, Systemgastronomie, Gemeinschaftsverpflegung und im Einzelhandel eingesetzt werden, nicht ausgebildet sind, um einerseits die notwendige Präsentation, Zubereitung und den Verkauf von Lebensmitteln zu gewährleisten, während andererseits zusätzlich eine Übergabe von insbesondere teilweise unverpackten Lebensmitteln an den Kunden in einer umweltfreundlichen Weise unter gleichzeitiger Einhaltung der geltenden Hygienebestimmungen oder Hygieneverordnungen gewährleistet ist.

Auf Grundlage dieser Problemstellung liegt somit der vorliegenden Erfindung die Aufgabe zugrunde, ein Thekenkonzept anzugeben, mit welchem es möglich ist, den bisherigen Bestellvorgang ohne Änderungen oder zumindest ohne wesentliche Änderungen nach wie vor zu gewährleisten, während gleichzeitig auf Einweggeschirr verzichtet werden kann, ohne dass dabei ohne zusätzlichem Personal der Arbeitsablauf bei der Bestellungsannahme und der Abarbeitung der Bestellung verlangsamt wird, wobei auch bei insbesondere teilweise unverpackten Lebensmittel die geltenden Hygienebestimmungen und/oder Hygieneverordnungen sicher eingehalten werden.

Eine weitere Aufgabe der vorliegenden Erfindung ist darin zu sehen, ein optimiertes Verfahren zum Aufnehmen von kundenspezifischen und insbesondere kundenindividualisierten Bestellungen bei einem Thekensystem anzugeben, wobei das Angebot zur (Wieder-)Befüllung mitgebrachter, kundeneigener Mehrwegbehälter mit Lebensmitteln ohne zusätzlichem Aufwand an Personal unter gleichzeitiger Einhaltung der geltenden Hygienebestimmungen und/oder Hygieneverantwortungen realisierbar ist.

Im Hinblick auf das Thekenkonzept wird die der Erfindung zugrundeliegende Aufgabe durch den Gegenstand des unabhängigen Patentanspruches 1 gelöst, wobei vorteilhafte Weiterbildungen des erfindungsgemäßen Thekensystems in den vom Anspruch 1 entsprechend abhängigen Patentansprüchen angegeben sind.

Demgemäß wird erfindungsgemäß insbesondere ein Thekensystem zur Übergabe von insbesondere zumindest teilweise unverpackten Lebensmitteln angegeben, wobei das Thekensystem einen dem Thekenpersonal zugeordneten ersten Bereich und einen hiervon getrennten und dem Kunden zugeordneten zweiten Bereich aufweist.

Erfindungsgemäß ist insbesondere vorgesehen, dass das Thekensystem eine Spülmaschine zum Reinigen von Spülgutteilen insbesondere in Gestalt von Trinkbechern, Tassen, Gläsern, Schalen oder Tellern aufweist. Die Spülmaschine des erfindungsgemäßen Thekensystems weist mindestens eine Behandlungszone und mindestens eine Transportvorrichtung auf zum Transportieren der zu reinigenden Spülgutteile von einem Einstellbereich der Spülmaschine durch die mindestens eine Behandlungszone der Spülmaschine zu einer Entnahme der Spülmaschine.

Hierbei ist vorgesehen, dass der Einstellbereich der Spülmaschine von dem zweiten Bereich des Thekensystems, d.h. von dem dem Kunden zugeordneten Bereich, zugänglich ist, insbesondere ausschließlich von dem zweiten Bereich des Thekensystems zugänglich ist, während hingegen der Entnahmebereich der Spülmaschine von dem ersten Bereich des Thekensystems, d.h. von jenem Bereich des Thekensystems, der dem Thekenpersonal zugeordnet ist, insbesondere ausschließlich zugänglich ist.

Im Vergleich zu aus dem Stand der Technik bekannten Thekensystemen und Thekenkonzepten weist das erfindungsgemäße Thekensystem diverse Vorteile auf: das erfindungsgemäße Thekensystem weist eine insbesondere im Thekensystem integrierte Spülmaschine auf mit einem Einstellbereich, welcher im Sinne des gewerblichen Geschirrspülens dem "unreinen Bereich" entspricht. Dieser "unreine Bereich" der zum Thekensystem gehörenden Spülmaschine ist vorzugsweise ausschließlich nur von dem zweiten Bereich des Thekensystems zugänglich, d.h. dem Bereich des Thekensystems, der dem Kunden zugeordnet ist. Dadurch ist eine sichere Trennung zwischen dem Bereich "hinter der Theke" und dem Bereich "vor der Theke" gegeben.

Durch diese Maßnahme ist insbesondere das Risiko der Umfeld-Kontamination durch nicht oder nicht ordnungsgemäß gereinigte Behälter (Becher, etc.) im Bereich der für ein Befüllen der Behälter notwendigen betrieblichen Einrichtungen minimiert oder gar auf null reduziert.

Andererseits weist die dem Thekensystem zugeordnete Spülmaschine einen Entnahmebereich auf, welcher dem im Sinne des gewerblichen Geschirrspülens "reinen Bereich" entspricht. Dieser "reine Bereich" der zu dem erfindungsgemäßen Thekensystem gehörenden Spülmaschine ist vorzugsweise ausschließlich von dem ersten Bereich des Thekensystems zugänglich, d. h. von dem Bereich des Thekensystems, der dem Thekenpersonal zugänglich ist.

Mit dieser Maßnahme ist sichergestellt, dass keine kundeneigenen Behälter, wie insbesondere Becher, in betriebliche Bereiche gelangen können, in denen offen mit leicht verderblichen Lebensmitteln umgegangen wird. Insbesondere wird dadurch wirksam vermieden, dass die Handhabung kundeneigener Mehrwegbehälter durch das Bedienpersonal "hinter der Theke" ohne eine vorherige hygienisch einwandfreie Behandlung der Mehrwegbehälter erfolgen kann.

Insbesondere kann auf das Bereitstellen von Umfüllgefäßen oder Becherhaltern bzw. Tabletts für die Kundenbecher verzichtet werden. Die erfindungsgemäße Lösung garantiert insbesondere, dass hygienisch unter Umständen nicht einwandfreie kundeneigene Behälter mit betrieblichen Einrichtungen, wie beispielsweise einer Kaffeemaschine, in Berührung kommen können.

Das erfindungsgemäße Thekensystem weist den weiteren Vorteil auf, dass die üblichen Abläufe bei der Aufnahme von Bestellungen, bei der Zubereitung und bei der Übergabe der bestellten Lebensmittel trotz der Verwendung von kundeneigenen Geschirrteilen nicht oder zumindest nur unwesentlich abgeändert werden müssen.

Das Angebot zur (Wieder-) Befüllung mitgebrachter, kundeneigener Mehrwegbehälter mit Lebensmitteln, wie beispielsweise kundeneigener Mehrwegbecher mit Heißgetränken zur Mitnahme ("Coffee-To-Go") ist mit Hilfe des erfindungsgemäßen Thekensystems umsetzbar, ohne dass hierzu mehr Thekenpersonal benötigt wird oder dass der Aufwand bei der Abarbeitung kundenspezifischer und insbesondere kundenindividualisierter Bestellungen erhöht werden muss.

Dadurch, dass erfindungsgemäß der Einstellbereich der zu dem Thekensystem gehörenden Spülmaschine von dem zweiten Bereich des Thekensystems, also dem Bereich des Thekensystems zugänglich ist, der dem Kunden zugeordnet ist, kann der Kunde bei der Bestellung beim Thekenpersonal seinen mitgebrachten, kundeneigenen Mehrwegbehälter über den Einstellbereich der Spülmaschine zuführen. Die Spülmaschine ist vorzugsweise derart konzipiert, dass die vollständige Reinigung von Spülgutteilen innerhalb etwa 30 bis 60 Sekunden erfolgt, also innerhalb der üblichen Zeitperiode, in der von dem Thekenpersonal eine Bestellung aufnehmbar und abrechenbar ist. Nach dem Bestell- und Abrechnungsvorgang liegt dann am Entnahmebereich der Spülmaschine der gereinigte kundeneigene Mehrwegbehälter vor, und zwar vorzugsweise im unmittelbaren Wirkbereich des Thekenpersonals. Demnach sind keine zusätzlichen Wege seitens des Thekenpersonals zu berücksichtigen, wenn ein von dem Kunden mitgebrachter, kundeneigener Mehrwegbehälter (wieder-) befüllt werden soll.

Das erfindungsgemäße Thekensystem reduziert darüber hinaus deutlich Ressourcen (Wasser, Energie und Chemie) beim Umgang mit kundeneigenen Mehrweggeschirr. Bisherige Thekensysteme sind nicht konzipiert, um kundeneigene Mehrwegbehälter hygienegerecht dem Bedienpersonal "hinter der Theke" bereitzustellen. Vielmehr ist es derzeit üblich, dass mitgebrachte, kundeneigenen Mehrwegbehälter außerhalb des Thekenbereichs in einer Spülmaschine gereinigt werden. Derartige Spülmaschinen sind jedoch in der Regel konzipiert, eine Vielzahl von Spülgutteilen gleichzeitig zu reinigen.

In der Praxis bedeutet dies, dass bei dem Angebot zur (Wieder-) Befüllung mitgebrachter, kundeneigener Mehrwegbehälter die Mehrwegbehälter einzeln in der nicht zum Thekensystem gehörenden Spülmaschine gereinigt werden, was einen erhöhten Wasser-, Energie- und Chemieverbrauch mit sich bringt.

In diesem Zusammenhang sei angemerkt, dass die zu dem Thekensystem gehörende Spülmaschine je Mehrwegbecher beispielsweise einen Frischwasserverbrauch von etwa 0,2 l bis 0,3 l bei einem Energieverbrauch von 200 Wh aufweist. Hierdurch können somit Wassereinsparungen zwischen 50 % bis 70 % und Energieeinsparungen in der gleichen Größenordnung erzielt werden.

In einer erfindungsgemäßen Thekensystem ist der erste Bereich des Thekensystems, welcher dem Thekenpersonal zugeordnet ist, über eine Theke von dem zweiten Bereich des Thekensystems, welcher dem Kunden zugeordnet ist, getrennt. Diese Realisierung des erfindungsgemäßen Thekensystems stellt eine leicht realisierbare Vorkehr zur Kontaminationsvermeidung und Risikominimierung bei der Befüllung mitgebrachter Behälter dar.

Eine weitere Vorkehrung zur Kontaminationsvermeidung und Risikominimierung ist darin zu sehen, dass der Einstellbereich der Spülmaschine von dem Entnahmebereich der Spülmaschine vorzugsweise räumlich separiert sein kann, wobei insbesondere der Einstellbereich der Spülmaschine und der Entnahmebereich der Spülmaschine in oder bei gegenüberliegenden Endbereichen der Spülmaschine ausgebildet sind, und/oder wobei insbesondere der Einstellbereich der Spülmaschine beispielsweise (aber nicht zwingend erforderlich) über eine Abtrennung von dem Entnahmebereich der Spülmaschine getrennt ist.

Mit diesen Vorkehrungen ist sichergestellt, dass der Einstellbereich der Spülmaschine, welcher die "unreine Seite" der Spülmaschine darstellt, beim zweiten Bereich des Thekensystems, also getrennt von den betrieblichen Einrichtungen, wie beispielsweise der Kaffeemaschine, vorliegt. Andererseits ist der Entnahmebereich der Spülmaschine ausschließlich nur von dem Thekenpersonal zugänglich.

Eine besonders bevorzugte Realisierung des Thekensystems sieht vor, dass das Thekensystem eine den ersten Bereich des Thekensystems von dem zweiten Bereich des Thekensystems trennende Theke aufweist, wobei die Theke einen ersten Bereich zum Aufnehmen der Spülmaschine und mindestens einen neben dem ersten Bereich angeordneten zweiten Bereich aufweist. Dieser zweite Bereich der Theke dient beispielsweise zur Übergabe der zuvor von dem Kunden bestellten Lebensmittel.

Die Spülmaschine kann als Auftischmaschine ausgeführt und auf der Theke des Thekensystems gestellt sein. Alternativ hierzu ist es denkbar, dass die Spülmaschine zumindest bereichs- oder teilweise in dem Thekensystem integriert ist, wobei insbesondere nur der Entnahme- und Einstellbereich der Spülmaschine auf der Thekenebene liegen.

Grundsätzlich ist es auch denkbar, dass der Entnahmebereich und/oder der Einstellbereich der Spülmaschine unterhalb der Thekenebene angeordnet sind/ist.

Denkbar in diesem Zusammenhang ist es beispielsweise, dass das Thekensystem eine den ersten Bereich des Thekensystems von dem zweiten Bereich des Thekensystems trennende Theke aufweist, wobei der Einstellbereich der Spülmaschine über mindestens eine Transportspur insbesondere in Gestalt eines Transportbands mit der mindestens einen Behandlungszone der Spülmaschine derart verbunden ist, dass zu reinigende Spülgutteile von dem Einstellbereich der Spülmaschine vorzugsweise automatisch zu der mindestens einen Behandlungszone der Spülmaschine transportierbar sind.

Da die zu dem Thekensystem gehörende Spülmaschine insbesondere ausgebildet ist, einzelne Spülgutteile zu reinigen, ist zur Realisierung einer besonders kompakten Bauform der Spülmaschine vorgesehen, dass die Transportvorrichtung der Spülmaschine mindestens eine Transportspur, insbesondere in Gestalt eines Transportbands, aufweist, wobei die mindestens eine Transportspur eine effektive Breite von vorzugsweise maximal 30 cm und insbesondere von maximal 15 cm aufweist.

Gemäß einer Weiterbildung des erfindungsgemäßen Thekensystems ist vorgesehen, dass im Thekensystem ein vorzugsweise insbesondere bedarfsweise mit dem Frischwassernetz strömungsmäßig verbindbarer Frischwassertank integriert ist zur Frischwasserversorgung der Spülmaschine.

Alternativ oder zusätzlich hierzu ist es denkbar, dass im Thekensystem ein vorzugsweise insbesondere bedarfsweise mit dem Abwassernetz strömungsmäßig verbindbarer Abwassertank integriert ist zum Zwischenspeichern von beim Betrieb der Spülmaschine anfallendem Abwasser.

Mit diesen Vorkehrungen ist eine Integration einer Spülmaschine im Thekensystem auch dann realisierbar, wenn das Thekensystem selber nicht am Frischwassernetz und/oder Abwassernetz angeschlossen oder anschließbar ist.

Vorzugsweise ist in diesem Zusammenhang vorgesehen, dass dem Abwassertank ein Wärmetauschersystem zugeordnet ist, um bedarfsweise zumindest einen Teil der thermischen Energie des beim Betrieb der Spülmaschine anfallenden Abwassers rückzugewinnen und beispielsweise zum Erwärmen des beim Betrieb der Spülmaschine benötigten Frischwassers zu verwenden.

Die zu dem erfindungsgemäßen Thekensystem gehörende Spülmaschine weist insbesondere eine Transportvorrichtung auf, die ausgebildet ist, eine vorab festgelegte oder festlegbare Gruppe von zu reinigenden Spülgutteilen chargenweise von dem Einstellbereich durch die mindestens eine Behandlungszone zu transportieren und dann die Gruppe von Spülgutteilen als gereinigte Spülgutteile dem Entnahmebereich zuzuführen.

Alternativ hierzu kann die Transportvorrichtung ausgebildet sein, die zu reinigenden Spülgutteile vereinzelt von dem Einstellbereich durch die mindestens eine Behandlungszone zu transportieren und dann dem Entnahmebereich als gereinigtes Spülgutteil zuzuführen.

Diese Ausführungsform der zu dem Thekensystem gehörenden Spülmaschine erlaubt es, wahlweise das aufgegebene Spülgut individuell zu reinigen, so dass sich die Spülmaschine insbesondere zum Reinigen von Mehrweg-Trinkgefäßen, wie beispielsweise Kaffeetassen, eignet.

Durch den kompakten Aufbau der erfindungsgemäßen Transportspülmaschine eignet sich diese insbesondere auch als Mehrweg-Trinkgefäß-Spülmaschine, wie beispielsweise Kaffeetassen-Spülmaschine, die in der direkten Umgebung des Heißgetränkeautomaten/der Kaffeemaschine aufgestellt werden kann und insbesondere Teil des Thekensystems ist.

Die Transportspülmaschine weist einen Eingabebereich auf, in den das verschmutzte Spülgut (insbesondere Trinkgefäß) eingestellt wird. Darüber hinaus weist die Transportspülmaschine einen von dem Eingabebereich räumlich getrennten Ausgabebereich auf, wo das saubere Spülgut entnommen werden kann.

Das Spülgut (Trinkgefäße wie Tassen, Gläser etc.) kann vereinzelt (d.h. eins nach dem anderen) aufgegeben werden und ebenso entnommen werden; allerdings ist grundsätzlich aber auch eine Beladung in kleineren Gruppen möglich.

Insbesondere handelt es bei der zu dem erfindungsgemäßen Thekensystem gehörenden Spülmaschine um eine Art Hybrid-Spülmaschine, bei welcher die Technologie von stationären Programmautomaten für Batch-Prozesse mit der Technologie von Transportspülmaschinen, die für einen kontinuierlichen Betrieb ausgebildet sind, kombiniert werden. Einerseits bietet die Spülmaschine den Vorteil der stationären Programmautomaten, die auf einen Batch-Prozess ausgelegt sind, während andererseits ebenfalls der Vorteil von Transportspülmaschinen verwendet wird. Der Platzbedarf zum Aufstellen der Spülmaschine entspricht maximal dem Platzbedarf einer als stationären Programmautomat ausgebildeten Spülmaschine, wobei gleichzeitig ein kontinuierlicher Betrieb der Spülmaschine, wie es bei Transportspülmaschinen bekannt und dort als Vorteil zu nennen ist, ermöglicht wird.

Insbesondere ist es in diesem Zusammenhang denkbar, dass die Transportvorrichtung ausgebildet ist, wahlweise entweder eine vorab festgelegte Gruppe von zu reinigenden Spülgutteilen chargenweise von dem Einstellbereich durch die mindestens eine Behandlungszone zu transportieren und dann die Gruppe von Spülgutteilen als gereinigte Spülgutteile dem Entnahmebereich zuzuführen, oder die zu reinigenden Spülgutteile vereinzelt von dem Einstellbereich durch die mindestens eine Behandlungszone zu transportieren und dann dem Entnahmebereich als gereinigtes Spülgutteil zuzuführen. Auf diese ist insbesondere ein individualisiertes Behandeln und ein individualisiertes Zuführen der behandelten Spülgutteile zum Entnahmebereich möglich.

Mit anderen Worten, ein Kunde kann seine persönliche Tasse in den Einstellbereich der Spülmaschine aufgeben, wobei sichergestellt ist, dass diese persönliche Tasse auch als solche erkennbar am Entnahmebereich ausgegeben wird.

In einer denkbaren Realisierung der erfindungsgemäßen Lösung ist vorgesehen, dass die Transportvorrichtung der Spülmaschine mindestens eine Transportspur, insbesondere in Gestalt eines Transportbands, aufweist, wobei diese mindestens eine Transportspur ausgebildet ist, die Spülgutteile vereinzelt durch die mindestens eine Behandlungskammer der Spülmaschine zu führen. Denkbar ist in diesem Zusammenhang insbesondere, dass die Breite der Transportspur entsprechend schmal gewählt ist. In einer bevorzugten Realisierung der zu dem erfindungsgemäßen Thekensystem gehörenden Spülmaschine weist die mindestens eine Transportspur somit eine effektive Breite von vorzugsweise maximal 30 cm und vorzugsweise von maximal 15 cm auf.

Insbesondere für größere Kaffeeshops ist es von Vorteil, wenn die Transportvorrichtung mindestens zwei parallel zueinander verlaufende Transportspuren, insbesondere jeweils in Gestalt eines Transportbands, aufweist. Damit jede dieser beiden Transportspuren vereinzelt die Spülgutteile durch die mindestens eine Behandlungszone transportieren kann, sollte eine entsprechend (geringe) Breite der Transportspuren gewählt werden, wobei sich insbesondere eine effektive Breite von maximal 30 cm und vorzugsweise maximal 15 cm aufweist.

Erfindungsgemäß weist die zum Thekensystem gehörende Spülmaschine eine Steuereinrichtung auf, welche ausgebildet ist, die mindestens eine Transportvorrichtung derart anzusteuern, dass mit der mindestens einen Transportvorrichtung die zu reinigenden Spülgutteile diskontinuierlich von dem Einstellbereich der Spülmaschine durch die mindestens eine Behandlungszone zu dem Entnahmebereich der Spülmaschine transportiert werden.

"Diskontinuierlich" bedeutet in diesem Zusammenhang, dass mit Hilfe der Transportvorrichtung beispielsweise die zu reinigenden Spülgutteile von dem Einstellbereich in die mindestens eine Behandlungszone transportiert werden, wobei dann die Transportvorrichtung stoppt und die Spülgutteile ortsfest in der Behandlungszone gereinigt (Waschphase und Klarspülphase bzw. optional anschließende Trocknungsphase) gereinigt werden, wobei danach mit Hilfe der Transportvorrichtung das gereinigte Spülgut zum Entnahmebereich transportiert wird. Indem in ein und derselben Behandlungszone zeitlich gesehen nacheinander verschiedene Behandlungen durchgeführt werden, reduziert sich der Platzbedarf der Spülmaschine.

Gemäß Realisierungen des erfindungsgemäßen Thekensystems ist die mindestens eine Behandlungszone der zu dem Thekensystem gehörenden Spülmaschine ausgebildet, zeitlich gesehen nacheinander mindestens ein über die mindestens eine Transportvorrichtung der mindestens einen Behandlungszone zugeführtes Spülgutteil einer Waschbehandlung und einer nachgeordneten Klarspülbehandlung sowie optional einer der Klarspülbehandlung nachgeordneten Trocknung zu unterwerfen.

Alternativ hierzu kann die Spülmaschine mindestens eine erste Behandlungszone aufweisen, welche als Waschzone ausgebildet ist, und mindestens eine der mindestens einen ersten Behandlungszone - in Transportrichtung der Spülgutteile gesehen - nachgeschaltete zweite Behandlungszone aufweisen, welche als Spülzone, insbesondere Klarspülzone, ausgebildet ist, wobei optional die Spülmaschine ferner mindestens eine dritte Behandlungszone aufweist, welche als Trocknungszone ausgebildet und der mindestens einen zweiten Behandlungszone - in Transportrichtung der Spülgutteile gesehen - nachgeschaltet ist.

Gemäß Realisierungen des erfindungsgemäßen Thekensystems ist vorgesehen, dass die Spülmaschine eine weitere Transportvorrichtung aufweist zum vorzugsweise automatischen und insbesondere bedarfsweisen Transportieren eines gereinigten Spülgutteils vom Entnahmebereich der Spülmaschine zu einem Dispenser, insbesondere zu einem Dispenser für ein Kalt- oder Warmgetränk eines Getränkeautomaten oder einer Kaffeemaschine, wobei die Spülmaschine insbesondere ferner einer Einrichtung zum Positionieren und/oder Ausrichten des Spülgutteils mit Bezug auf den Dispenser aufweist.

Ferner ist es denkbar, dass der Spülmaschine ein Pfandsystem zugeordnet ist, zum Rückführen eines in den Einstellbereich der Spülmaschine eingegebenen oder einzugebenden Spülgutteils insbesondere an den Betreiber der Spülmaschine oder zum Wiederverwenden des in den Einstellbereich der Spülmaschine eingegebenen oder einzugebenden Spülgutteils.

Bevorzugt befindet sich der Eingabebereich und der Ausgabebereich, die von einander räumlich getrennt sind, auf gegenüberliegenden Maschinenseiten.

Für die Übergabe an die Transportvorrichtung kann eine Ausrichtung des Spülguts sowie eine Orientierung des Spülguts erforderlich sein. Eine korrekte Ausrichtung und/oder Orientierung kann mechanisch in der Spülmaschine erzeugt oder einfacher vom Benutzer schon bei der Beladung, d.h. beim Eingeben des Spülguts in den Eingabebereich, sichergestellt werden. Zur Unterstützung kann beispielsweise visuell auf die erforderliche Orientierung hingewiesen werden.

Gemäß einer bevorzugten Ausführungsform der vorliegenden Erfindung weist hierzu der Eingabebereich eine Zugangsöffnung mit einer dem zu reinigendem Trinkgefäß entsprechenden Kulisse auf, wobei über die Kulisse eine Orientierung und gegebenenfalls Ausrichtung des Spülguts (Trinkgefäß) beim Einbringen des Spülguts (Trinkgefäße) in den Eingabebereich der Spülmaschine vorgegeben wird.

Gemäß Ausführungsformen der erfindungsgemäßen Spülmaschine ist der Ausgabebereich der Spülmaschine als Aufbewahrungsbereich ausgebildet, in welchem eine vorab festgelegte oder festlegbare Anzahl an gereinigten Behältern, wie etwa Trinkgefäßen zwischengespeichert werden kann. Alternativ oder zusätzlich hierzu ist es denkbar, dass der Eingabebereich als Aufbewahrungsbereich ausgebildet ist, zum Zwischenspeichern von noch zu reinigenden Behältern (Trinkgefäßen).

Besonders bevorzugt ist vorgesehen, dass die Spülmaschine einen Aufbewahrungsbereich aufweist, in welchem eine vorab festgelegte oder festlegbare Anzahl an gereinigten Behältern, wie etwa Trinkgefäßen zwischengespeichert werden kann, wobei die Transportvorrichtung ausgebildet ist, bedarfsweise Behälter/Trinkgefäße von dem Aufbewahrungsbereich zum Ausgabebereich der Spülmaschine zu transportieren.

Diese Lösung hat den Vorteil, dass in dem Ausgabebereich nur dann ein Behälter/Trinkgefäß ausgegeben wird, wenn dieses von dem Benutzer angefordert wird. Eine Verschmutzung von bereits gereinigtem Spülgut im Ausgabebereich ist somit ausgeschlossen.

Als Aufbewahrungsbereich kann eine Platte dienen, auf welche die Transportvorrichtung die gereinigten Trinkgefäße (z.B. Tassen, Becher und dergleichen) hintereinander schiebt. Hierzu kann die Transportvorrichtung beispielsweise ein Transportband aufweisen.

Wenn die Spülmaschine in Kombination mit einem Heißgetränkeautomaten verwendet wird, ist es von Vorteil, wenn in dem Aufbewahrungsbereich oder zumindest in dem Ausgabebereich der Spülmaschine das Trinkgefäß vorgewärmt wird. Denkbar in diesem Zusammenhang ist es beispielsweise, eine entsprechende Heizeinrichtung im Aufbewahrungsbereich oder im Ausgabebereich vorzusehen. Als Heizeinrichtung können Wärmeschlangen unter oder Wärmestrahler über dem Aufbewahrungsbereich bzw. Ausgabebereich dienen.

Die Heizeinrichtung kann außerdem so angeordnet sein, dass die Trinkgefäße schon auf ihrem Weg aus der Klarspülzone zu dem Ausgabebereich oder Aufbewahrungsbereich erwärmt werden. Bei einer besonders vorteilhaften Ausführungsform der Erfindung kann die Heizeinrichtung auch zum Trocknen der Trinkgefäße eingesetzt werden.

Gemäß einem weiteren Aspekt der vorliegenden Erfindung ist vorgesehen, dass die Spülmaschine als Rücknahme-Automat für Mehrweg-Trinkgefäße, insbesondere Kaffeetassen oder dergleichen, ausgebildet ist und vorzugsweise eine Rückvergütungseinrichtung aufweist. Die Rückvergütung kann als Bargeld, Bon, Chipkarte oder mittels bargeldlosem Aufwertsystem etc. erfolgen.

Erfindungsgemäß weist der zu dem erfindungsgemäßen Thekensystem gehörenden Spülmaschine eine Steuereinrichtung auf, um die Transportvorrichtung und die der Wasch- und Klarspülzone zugeordneten ansteuerbaren Komponenten (Pumpe, Ventil, Heizeinrichtung, etc.) anzusteuern. Die Steuereinrichtung ist vorzugsweise ausgebildet, den Transport des Spülguts durch die Behandlungszonen in Abhängigkeit von der Anwesenheit oder Abwesenheit von Trinkgefäßen im Eingabebereich und/oder Ausgabebereich entsprechend zu koordinieren.

Das erfindungsgemäße Thekensystem ist - wie bereits ausgeführt - insbesondere für Kaffeeshops konzipiert. Aufgrund der kompakten Bauweise lässt sich die Spülmaschine beispielsweise in das Thekenkonzept eines Kaffeeshops integrieren. Die Spülmaschine kann insbesondere als Untertisch- oder bevorzugt als Auftischmaschine ausgeführt und einer an eine Thekengröße angepasste Abmessung aufweisen.

Vorzugsweise weist die Grundfläche der Spülmaschine eine Abmessung von maximal 700 mm x 1.000 mm und vorzugsweise maximal 500 mm x 600 mm und noch bevorzugter maximal 350 mm x 600 mm auf. Mit diesen Abmessungen kann die Spülmaschine problemlos auf einer üblichen Theke platziert werden, die in der Regel eine Tiefe von 600 mm aufweist. Ebenfalls kann aufgrund der hybriden Ausgestaltung der Spülmaschine eine relativ geringe Bauhöhe realisiert werden. Gemäß Ausführungsformen beträgt die Höhe der Spülmaschine maximal 500 mm.

Gemäß Realisierungen der Spülmaschine weist diese eine Tür, beispielsweise eine Tambour-Tür, auf zum bedarfsweisen Verschließen einer zum Einstellbereich der Spülmaschine führenden Zugangsöffnung. Anstelle einer Tür kann auch ein Spritzvorhang (Spritztuch) bei der Zugangsöffnung vorgesehen sein.

Insbesondere ist es von Vorteil, dass der mindestens einen Behandlungszone eine Absaugeinrichtung zum Absaugen von Wrasen zugeordnet ist, und/oder dass der mindestens einen Behandlungszone ein Spritzschutz zugeordnet ist zum Verhindern eines Austritts von Wrasen und/oder Flüssigkeit aus der mindestens einen Behandlungszone.

Die Zugangsöffnung weist vorzugsweise eine Höhe von maximal 300 mm und vorzugsweise von maximal 250 mm und eine Breite von maximal 500 mm und vorzugsweise von maximal 350 mm auf. Dies erlaubt es, dass Trinkgefäße einzeln oder nebeneinander in den Einstellbereich eingestellt werden können.

Gemäß Ausführungsformen der zu dem erfindungsgemäßen Thekensystem gehörenden Spülmaschine kommt als Transportvorrichtung eine Spiral- oder Helix-Fördereinrichtung und/oder eine Karussell-Fördereinrichtung zum Einsatz. Als Karussell-Fördereinrichtung eignet sich beispielsweise eine Drehscheibe, um eine zirkulare Förderung des Spülguts zu ermöglichen.

Vorzugsweise weist die Spülmaschine eine erste Tür, vorzugsweise in Gestalt einer Tambour-Tür auf zum bedarfsweisen Verschließen der Zugangsöffnung zum Einstellbereich der Spülmaschine und vorzugsweise ferner eine zweite Tür auf, vorzugsweise in Gestalt einer Tambour-Tür zum bedarfsweisen Verschließen einer Zugangsöffnung zum Entnahmebereich der Spülmaschine.

Nachfolgend werden exemplarische Ausführungsformen des erfindungsgemäßen Thekensystems anhand der beiliegenden Zeichnungen näher beschrieben.

Es zeigen:
- FIG. 1: schematisch eine exemplarische Ausführungsform des erfindungsgemäßen Thekensystems;
- FIG. 2: schematisch und in einer Seitenansicht eine erste exemplarische Ausführungsform einer zu dem erfindungsgemäßen Thekensystem gehörenden Spülmaschine;
- FIG. 3a: schematisch und in einer isometrischen Ansicht einer zweite exemplarische Ausführungsform der zu dem erfindungsgemäßen Thekensystem gehörenden Spülmaschine, und zwar in einem Zustand, in welchem eine Tür der Spülmaschine zum Einstellbereich geöffnet ist und in dem Einstellbereich kein Spülgutteil aufgenommen ist;
- FIG. 3b: schematisch und in einer Ansicht auf den Einstellbereich die zweite exemplarische Ausführungsform der zu dem erfindungsgemäßen Thekensystem gehörenden Spülmaschine gemäß FIG. 3a;
- FIG. 3c: schematisch und in einer isometrischen Ansicht die zweite exemplarische Ausführungsform der zu dem erfindungsgemäßen Thekensystem gehörenden Spülmaschine, und zwar in einem Zustand, in welchem eine Tür der Spülmaschine zum Einstellbereich geschlossen ist;
- FIG. 3d: schematisch und in einer Ansicht auf den Einstellbereich die zweite exemplarische Ausführungsform der zu dem erfindungsgemäßen Thekensystem gehörenden Spülmaschine gemäß FIG. 3c;
- FIG. 3e: schematisch und in einer Seitenansicht die zweite exemplarische Ausführungsform der zu dem erfindungsgemäßen Thekensystem gehörenden Spülmaschine;
- FIG. 3f: schematisch und in einer isometrischen Ansicht die zweite exemplarische Ausführungsform der zu dem erfindungsgemäßen Thekensystem gehörenden Spülmaschine, und zwar in einem Zustand, in welchem eine Tür der Spülmaschine zum Einstellbereich geöffnet ist und in dem Einstellbereich mindestens ein Spülgutteil aufgenommen ist;
- FIG. 3g: schematisch und in einer Ansicht auf den Einstellbereich die zweite exemplarische Ausführungsform der zu dem erfindungsgemäßen Thekensystem gehörenden Spülmaschine gemäß FIG. 3f;
- FIG. 3h: schematisch und in einer geschnittenen Seitenansicht die zweite exemplarische Ausführungsform der zu dem erfindungsgemäßen Thekensystem gehörenden Spülmaschine, und zwar in einem Zu- stand, in welchem mindestens ein Spülgutteil jeweils im Einstellbereich, in der mindestens einen Behandlungszone und im Entnahmebereich der Spülmaschine vorhanden ist;
- FIG. 4a: schematisch und in einer isometrischen Ansicht eine dritte exemplarische Ausführungsform der zu dem erfindungsgemäßen Thekensystem gehörenden Spülmaschine, und zwar in einem Zustand, in welchem eine Tür der Spülmaschine zum Einstellbereich geöffnet ist und in dem Einstellbereich kein Spülgutteil aufgenommen ist;
- FIG. 4b: schematisch und in einer Ansicht auf den Einstellbereich die dritte exemplarische Ausführungsform der zu dem erfindungsgemäßen Thekensystem gehörenden Spülmaschine gemäß FIG. 4a;
- FIG. 4c: schematisch und in einer isometrischen Ansicht die dritte exemplarische Ausführungsform der zu dem erfindungsgemäßen Thekensystem gehörenden Spülmaschine, und zwar in einem Zustand, in welchem eine Tür der Spülmaschine zum Einstellbereich geschlossen ist;
- FIG. 4d: schematisch und in einer Ansicht auf den Einstellbereich die dritte exemplarische Ausführungsform der zu dem erfindungsgemäßen Thekensystem gehörenden Spülmaschine gemäß FIG. 4c;
- FIG. 4e: schematisch und in einer Seitenansicht die dritte exemplarische Ausführungsform der zu dem erfindungsgemäßen Thekensystem gehörenden Spülmaschine;
- FIG. 4f: schematisch und in einer isometrischen Ansicht die dritte exemplarische Ausführungsform der zu dem erfindungsgemäßen Thekensystem gehörenden Spülmaschine, und zwar in einem Zustand, in welchem eine Tür der Spülmaschine zum Einstellbereich geöffnet ist und in dem Einstellbereich mindestens ein Spülgutteil aufgenommen ist;
- FIG. 4g: schematisch und in einer Ansicht auf den Einstellbereich die dritte exemplarische Ausführungsform der zu dem erfindungsgemäßen Thekensystem gehörenden Spülmaschine gemäß FIG. 4f;
- FIG. 4h: schematisch und in einer geschnittenen Seitenansicht die dritte exemplarische Ausführungsform der zu dem erfindungsgemäßen Thekensystem gehörenden Spülmaschine, und zwar in einem Zustand, in welchem mindestens ein Spülgutteil jeweils im Einstellbereich, in der mindestens einen Behandlungszone und im Entnahmebereich der Spülmaschine vorhanden ist;
- FIG. 5a: schematisch und in einer isometrischen Ansicht eine vierte exemplarische Ausführungsform der zu dem erfindungsgemäßen Thekensystem gehörenden Spülmaschine, und zwar in einem Zustand, in welchem eine Tür der Spülmaschine zum Einstellbereich geöffnet ist und in dem Einstellbereich kein Spülgutteil aufgenommen ist;
- FIG. 5b: schematisch und in einer Ansicht auf den Einstellbereich die vierte exemplarische Ausführungsform der zu dem erfindungsgemäßen Thekensystem gehörenden Spülmaschine gemäß FIG. 5a;
- FIG. 5c: schematisch und in einer isometrischen Ansicht die vierte exemplarische Ausführungsform der zu dem erfindungsgemäßen Thekensystem gehörenden Spülmaschine, und zwar in einem Zustand, in welchem eine Tür der Spülmaschine zum Einstellbereich geschlossen ist;
- FIG. 5d: schematisch und in einer Ansicht auf den Einstellbereich die vierte exemplarische Ausführungsform der zu dem erfindungsgemäßen Thekensystem gehörenden Spülmaschine gemäß FIG. 5c;
- FIG. 5e: schematisch und in einer Seitenansicht die vierte exemplarische Ausführungsform der zu dem erfindungsgemäßen Thekensystem gehörenden Spülmaschine;
- FIG. 5f: schematisch und in einer isometrischen Ansicht die vierte exemplarische Ausführungsform der zu dem erfindungsgemäßen Thekensystem gehörenden Spülmaschine, und zwar in einem Zustand, in welchem eine Tür der Spülmaschine zum Einstellbereich geöffnet ist und in dem Einstellbereich mindestens ein Spülgutteil aufgenommen ist;
- FIG. 5g: schematisch und in einer Ansicht auf den Einstellbereich die vierte exemplarische Ausführungsform der zu dem erfindungsgemäßen Thekensystem gehörenden Spülmaschine gemäß FIG. 5f;
- FIG. 5h: schematisch und in einer geschnittenen Seitenansicht die vierte exemplarische Ausführungsform der zu dem erfindungsgemäßen Thekensystem gehörenden Spülmaschine, und zwar in einem Zustand, in welchem mindestens ein Spülgutteil jeweils im Einstellbereich, in der mindestens einen Behandlungszone und im Entnahmebereich der Spülmaschine vorhanden ist;
- FIG. 6a: schematisch und in einer isometrischen Ansicht eine fünfte exemplarische Ausführungsform der zu dem erfindungsgemäßen Thekensystem gehörenden Spülmaschine, und zwar in einem Zustand, in welchem in dem Entnahmebereich der Spülmaschine ein Spülgutteil aufgenommen ist;
- FIG. 6b: schematisch und in einer isometrischen Ansicht die fünfte exemplarische Ausführungsform der zu dem erfindungsgemäßen Thekensystem gehörenden Spülmaschine, und zwar in einem Zustand, in welchem in dem Entnahmebereich der Spülmaschine zwei Spülgutteile aufgenommen sind;
- FIG. 6c: schematisch und in einer geschnittenen Draufsicht die fünfte exemplarische Ausführungsform der zu dem erfindungsgemäßen Thekensystem gehörenden Spülmaschine gemäß FIG. 6b;
- FIG. 7: schematisch und in einer isometrischen Ansicht eine weitere Ausführungsvariante einer zu dem erfindungsgemäßen Thekensystem gehörenden Spülmaschine;
- FIG. 8: schematisch und in einer isometrischen Ansicht eine weitere Ausführungsvariante einer zu dem erfindungsgemäßen Thekensystem gehörenden Spülmaschine;
- FIG. 9a bis d: in unterschiedlichen Ansichten und jeweils schematisch eine Ausführungsvariante des erfindungsgemäßen Thekensystems; und
- FIG. 10a bis d: in unterschiedlichen Ansichten und jeweils schematisch eine Ausführungsvariante des erfindungsgemäßen Thekensystems.

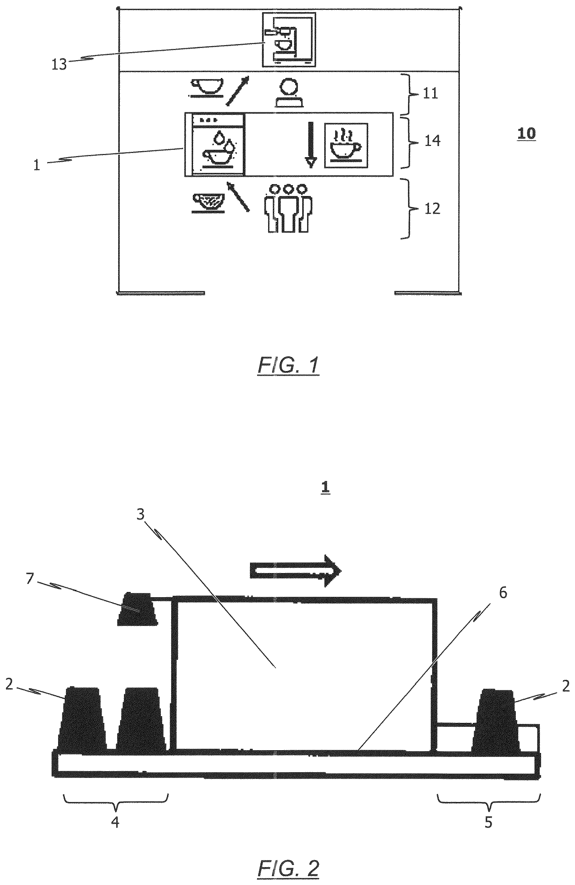

FIG. 1 zeigt schematisch eine exemplarische Ausführungsform des neuartigen Thekenkonzepts, und zwar am Beispiel eines Kaffeeshops. Das Thekenkonzept ist so konstruiert, dass ein Angebot zur (Wieder-)Befüllung mitgebrachter, kundeneigener Mehrwegbecher mit Heißgetränken zur Mitnahme realisierbar ist, wobei sichergestellt ist, dass seitens des Betreibers des Kaffeeshops die geltenden Hygienebestimmungen oder Hygieneverordnungen eingehalten werden, ohne dass zusätzliches Personal zur Bedienung der Kunden benötigt wird und ohne dass der Arbeitsablauf bei der Bestellungsannahme und der Abarbeitung der Bestellung verlangsamt wird.

Das Thekensystem 10 dient dabei zur Annahme von kundenspezifischen Bestellungen, gegebenenfalls zum Abrechnen der Bestellungen sowie insbesondere zur Übergabe der bestellten Ware. Bei der bestellten Ware handelt es sich insbesondere um zumindest teilweise unverpackte Lebensmittel, wie beispielsweise Getränke oder Gebäckteile etc.

Wie in Betriebsstätten der Gastronomie, Systemgastronomie, Gemeinschaftsverpflegung und im Einzelhandel üblich, weist das Thekensystem 10 einen dem Thekenpersonal zugeordneten ersten Bereich 11 und einen hiervon getrennten und dem Kunden zugeordneten zweiten Bereich 12 auf.

Das in FIG. 1 schematisch dargestellte Thekensystem 10 zeichnet sich dadurch aus, dass dieses eine Spülmaschine 1 zum Reinigen von Spülgutteilen 2 insbesondere in Gestalt von Trinkbechern, Tassen, Gläsern, Schalen oder Tellern aufweist.

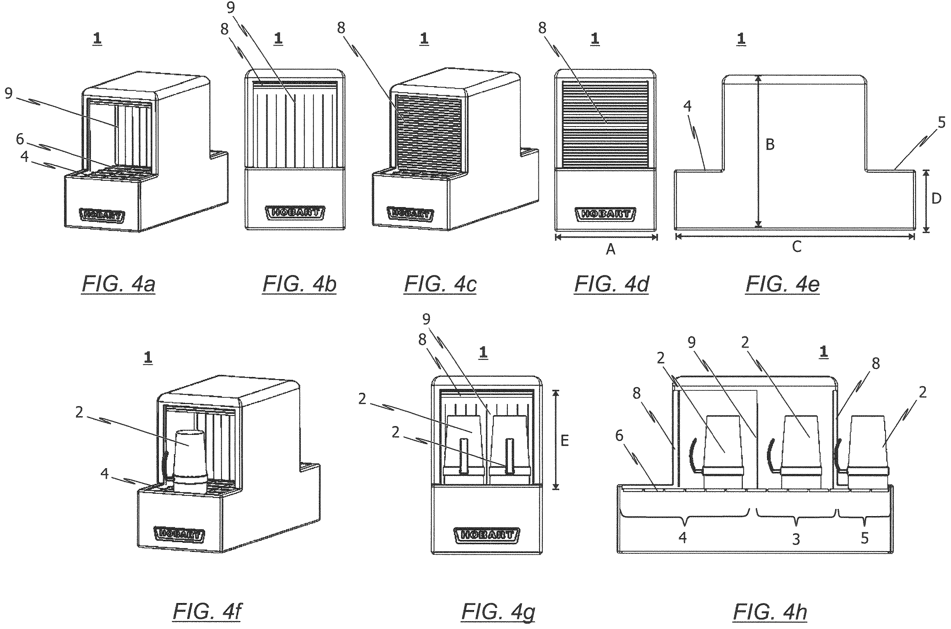

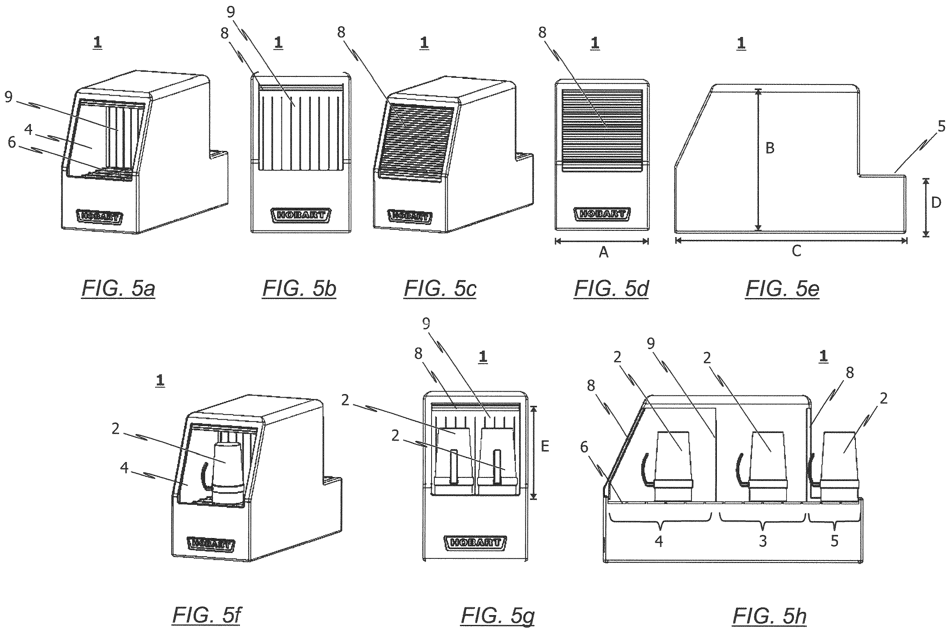

Wie es anschließend unter Bezugnahme auf die in FIG. 2 bis FIG. 8 gezeigten Ausführungsformen von möglichen Spülmaschinen 1 erklärt wird, weist die Spülmaschine 1 mindestens eine Behandlungszone 3 und mindestens eine Transportvorrichtung 6 zum Transportieren der zu reinigenden Spülgutteile 2 von einem Einstellbereich 4 der Spülmaschine 1 durch die mindestens eine Behandlungszone 3 der Spülmaschine 1 zu einem Entnahmebereich 5 der Spülmaschine 1 auf. Insbesondere ist in diesem Zusammenhang vorgesehen, dass der Einstellbereich 4 der Spülmaschine 1 von dem zweiten Bereich 12 des Thekensystems 10 und der Entnahmebereich 5 der Spülmaschine 1 von dem ersten Bereich 11 des Thekensystems 10 zugänglich ist.

Dabei entspricht der Einstellbereich 4 der zu dem Thekensystem 10 gehörenden Spülmaschine 1 dem "unreinen Bereich" im Sinne des gewerblichen Geschirrspülens. Dieser "unreine Bereich" der zum Thekensystem 10 gehörenden Spülmaschine 1 ist ausschließlich nur von dem zweiten Bereich 12 des Thekensystems 10 zugänglich, das heißt von dem Bereich des Thekensystems 10, der dem Kunden zugeordnet ist.

Der Kunde kann somit einen gegebenenfalls noch nicht gereinigten und nicht den geltenden Hygienebestimmungen und/oder Hygieneverordnungen entsprechenden Behälter 2 in den Einstellbereich 4 der Spülmaschine 1 eingeben, wobei dann dieser Behälter 2 vorzugsweise automatisch durch die mindestens eine Behandlungszone 3 der Spülmaschine 1 transportiert und am Entnahmebereich 5 der Spülmaschine 1 dem Thekenpersonal im gereinigten Zustand zur Verfügung gestellt wird. Dabei ist die Spülmaschine 1 vorzugsweise derart konzipiert, dass das Reinigen eines Spülgutteils weniger als 60 Sekunden und vorzugsweise weniger als 40 Sekunden Zeit in Anspruch nimmt.

Während dieser zum Reinigen der kundeneigenen Behälter 2 notwendigen Zeitspanne kann gleichzeitig die Bestellaufnahme durch das Thekenpersonal vorgenommen werden. Üblicherweise dauert die Bestellaufnahme, das Abrechnen der bestellten Ware etc. mindestens eine Minute pro Kunde an.

Das von der Spülmaschine 1 gereinigte Spülgutteil 2 kann dann von dem Thekenpersonal mit dem bestellten Lebensmittel, wie beispielsweise mit einem Heißgetränk aus einer Kaffeemaschine 13 befüllt und anschließend dem Kunden übergeben werden.

Nachfolgend werden unter Bezugnahme auf die Darstellungen in FIG. 2 bis FIG. 8 unterschiedliche Ausführungsvarianten der zu dem erfindungsgemäßen Thekensystem 10 gehörenden Spülmaschine 1 beschrieben.

In FIG. 2 ist schematisch und in einer Seitenansicht eine erste exemplarische Ausführungsform der zum dem erfindungsgemäßen Thekensystem 10 gehörenden Spülmaschine 1 gezeigt. Die Spülmaschine 1 eignet sich insbesondere zum Reinigen von Spülgutteilen 2 in Gestalt von Trinkgefäßen, insbesondere in Gestalt von Trinkbechern, Tassen, Gläsern oder Flaschen.

Hierzu weist die Spülmaschine 1 mindestens eine Behandlungszone 3 und mindestens eine Transportvorrichtung 6 zum Transportieren der zu reinigenden Spülgutteile 2 von einem Einstellbereich 4 der Spülmaschine 1 durch die mindestens eine Behandlungszone 3 der Spülmaschine 1 zu einem Entnahmebereich 5 der Spülmaschine 1 auf.

Dabei ist die Transportvorrichtung 6 ausgebildet, eine vorab festgelegte oder festlegbare Gruppe von zu reinigenden Spülgutteilen 2 chargenweise von dem Einstellbereich 4 durch die mindestens eine Behandlungszone 3 zu transportieren und dann die Gruppe von Spülgutteilen 2 als gereinigte Spülgutteile 2 dem Entnahmebereich 5 zuzuführen, oder die zu reinigenden Spülgutteile 2 vereinzelt von dem Einstellbereich 4 durch die mindestens eine Behandlungszone 3 zu transportieren und dann dem Entnahmebereich 5 als gereinigtes Spülgutteil 2 zuzuführen.

Im Einzelnen weist die Spülmaschine 1 ein Gehäuse auf, in welchem als Behandlungszonen 3 eine Waschzone sowie eine Klarspülzone untergebracht sind.

Bei der Klarspülzone handelt es sich um eine Frischwasser-Klarspülzone, in welcher Frischwasser mit gegebenenfalls zudosiertem Klarspüler auf das zu behandelnde Spülgut versprüht wird.

In diesem Zusammenhang ist es denkbar, dass zwischen der Waschzone und der Klarspülzone noch eine weitere Behandlungszone 3 in Gestalt einer Pumpen-Klarspülzone vorgesehen ist. In dieser Pumpen-Klarspülzone wird die zuvor in der Frischwasser-Klarspülzone versprühte Flüssigkeit rezirkulierend auf das Spülgut gesprüht.

Die einzelnen Behandlungszonen 3 der Spülmaschine 1 können räumlich voneinander getrennt angeordnet sein, wobei zwischen den Behandlungszonen 3 ein entsprechender Spritzschutz, beispielsweise in Gestalt eines Vorhangs, vorgesehen sein kann, um ein Überspritzen von Flüssigkeit und eine Wiederanschmutzung des Spülguts zu verhindern.

Um jedoch einen möglichst kompakten Aufbau der Spülmaschine 1 zu erzielen, ist erfindungsgemäß vorgesehen, dass die Behandlungszonen 3 oder zumindest einige Behandlungszonen 3 der Spülmaschine 1 in einer gemeinsamen Behandlungskammer der Spülmaschine 1 ausgebildet sind. Erfindungsgemäß weist die Spülmaschine 1 eine Steuereinrichtung auf, welche ausgebildet ist, die mindestens eine Transportvorrichtung 6 derart anzusteuern, dass mit der mindestens einen Transportvorrichtung 6 die zu reinigenden Spülgutteile 2 diskontinuierlich von dem Einstellbereich 4 der Spülmaschine 1 durch die mindestens eine Behandlungszone 3 zu dem Entnahmebereich 5 der Spülmaschine 1 transportiert werden.

Die exemplarische Ausführungsform der zum dem erfindungsgemäßen Thekensystem 10 gehörenden Spülmaschine 1, wie sie exemplarisch in FIG. 2 dargestellt ist, zeichnet sich dadurch aus, dass diese einen Einstellbereich 4 aufweist, in den manuell das in der Spülmaschine 1 zu reinigende Spülgut eingegeben/eingesetzt werden kann. Darüber hinaus ist ein separat hiervon ausgeführter Entnahmebereich 5 vorgesehen, über den das in den Behandlungszonen 3 der Spülmaschine 1 behandelte/gereinigte Spülgut ausgegeben wird.

Der Einstellbereich 4 und der Entnahmebereich 5 sind insbesondere an gegenüberliegenden Seiten des Gehäuses der Spülmaschine 1 ausgebildet.

Die Spülmaschine 1 weist ferner die bereits erwähnte mindestens eine Transportvorrichtung 6 auf, mit welcher das in den Einstellbereich 4 eingegebene (schmutzige) Spülgut durch die Behandlungszonen 3 der Spülmaschine 1 zu dem Entnahmebereich 5 gefördert wird.

Aufgrund der Kompaktheit der Spülmaschine 1 kann die Beladungsöffnung des Einstellbereiches 4 entsprechend klein ausfallen. Wenn - wie bei den in den Zeichnungen gezeigten exemplarischen Ausführungsformen - die Spülmaschine 1 zum Reinigen von Trinkgefäßen, insbesondere Mehrweg-Trinkgefäßen wie Kaffeetassen, dient, kann die Beladungsöffnung des Einstellbereiches 4 ein wenig höher als das zu behandelnde Trinkgefäß 2 sein.

Obgleich in FIG. 2 nicht dargestellt, kann der Zugangsöffnung des Einstellbereiches 4 der Spülmaschine 1 eine dem zu reinigenden Trinkgefäß 2 entsprechende Kulisse zugeordnet sein, um eine Orientierung des Trinkgefäßes 2 beim Einbringen des Trinkgefäßes 2 in den Einstellbereich 4 vorzugeben.

Der Entnahmebereich 5 der Spülmaschine 1 gemäß FIG. 2 ist als Aufbewahrungsbereich ausgebildet und dient zum Zwischenspeichern einer vorab festgelegten oder festlegbaren Anzahl an gereinigten Trinkgefäßen 2. In gleicher Weise kann der Einstellbereich 4 der Spülmaschine 1 ebenfalls als Aufbewahrungsbereich ausgebildet sein, um eine vorab festgelegte oder festlegbare Anzahl an zu reinigenden Trinkgefäßen 2 zwischen zu speichern. Dies ermöglicht einen sogenannten Batch-Betrieb der Spülmaschine 1.

Erfindungsgemäß weist die Spülmaschine 1 eine Steuereinrichtung auf, um die Transportvorrichtung 6 sowie vorzugsweise die der Wasch- und Klarspülzone zugeordneten ansteuerbaren Komponenten entsprechend anzusteuern. Die Steuereinrichtung ist ausgebildet, die Transportvorrichtung 6 der Spülmaschine 1 und gegebenenfalls die ansteuerbaren Komponenten der Wasch- und Klarspülzone in Abhängigkeit von einer Anwesenheit oder Abwesenheit oder in Abhängigkeit einer Anzahl von Trinkgefäßen 2 im Einstellbereich 4 und/oder Entnahmebereich 5 anzusteuern.

Obgleich in FIG. 2 nicht dargestellt, ist es denkbar, dass die Spülmaschine 1 als Rücknahme-Automat für Mehrweg-Trinkgefäße 2, insbesondere Kaffeetassen, ausgebildet ist und vorzugsweise eine entsprechende Rückvergütungseinrichtung aufweist.

Mit der erfindungsgemäßen Lösung ist eine Zeitersparnis bei der Handhabung erzielbar. Schmutziges Spülgut (Trinkgefäße 2) gehen direkt in die Spülmaschine 1, d.h., kein Transport von schmutzigen Trinkgefäßen 2 in eine Küche bzw. saubere Trinkgefäße 2 von der Küche zurück zu dem Heißgetränkeautomaten.

Die zum dem erfindungsgemäßen Thekensystem 10 gehörende Spülmaschine 1 eignet sich insbesondere als eine spezielle Kaffeetassen-Spülmaschine 1 die sich idealerweise in der direkten Umgebung der Kaffeemaschine 13 oder sogar als integraler Bestandteil in einem Kaffeeshop oder ähnlichem Aufstellungsort befindet. Die Spülmaschine 1 besitzt einen Eingabeort im dem das verschmutze Geschirr eingestellt wird und einen davon getrennten Ausgabeort wo das saubere Geschirr entnommen werden kann. Die Tassen, Gläser etc. können vereinzelt (d.h. eine nach der anderen) aufgeben werden und ebenso entnommen werden, auch eine Beladung in kleineren Gruppen sollte ggf. möglich sein.

Bevorzugt befindet sich der Eingabeort auf einer Schmutzseite und der Ausgabeort an einer räumlich getrennten Sauberseite. Beispielsweise kann die Tasse auf der einen Seite von einem Kunden eingestellt und auf der gegenüberliegenden Seite vom gleichen Kunden, oder von einem anderen Kunden oder sogar von einer Service Kraft entnommen werden.

Beispielsweise eignet sich die zum dem erfindungsgemäßen Thekensystem 10 gehörende Spülmaschine 1 für den Einsatz in Kaffeeshop-Ketten, wie z.B. Starbucks: Ein Kunde kommt mit "seiner" Tasse in den Kaffeeshop und wünscht eine Neubefüllung in "seine" Tasse.

Die Tasse wird von der Spülmaschine 1 automatisch gewaschen und dann neu befüllt. Damit der Kunde auch wirklich "seine" eigene Tasse zurück bekommt ist diese gekennzeichnet - entweder analog oder digital.

Zur Realisierung dieser Ausführungsform ist es denkbar, dass die Spülmaschine 1 vorzugsweise im oder beim Einstellbereich 4 ein System 7 zur Spülgutidentifizierung aufweist, wobei das System 7 zur Spülgutidentifizierung ausgebildet ist, einem Spülgutteil 2 in oder beim Einstellbereich 4 einen Identifikator zuzuordnen, welcher eine eindeutige Identifizierung des in dem Einstellbereich 4 aufgegebenen Spülgutteils im Entnahmebereich 5 der Spülmaschine 1 erlaubt.

In diesem Zusammenhang ist es denkbar, dass die Spülmaschine 1 vorzugsweise im oder beim Einstellbereich 4 ein System 7 zur Spülgutidentifizierung aufweist, wobei das System 7 zur Spülgutidentifizierung ausgebildet ist, einem Spülgutteil 2 im oder beim Einstellbereich 4 einen Identifikator zuzuordnen, welcher eine eindeutige Identifizierung des in den Einstellbereich 4 aufgegeben Spülgutteils im Entnahmebereich 5 der Spülmaschine 1 erlaubt.

Grundsätzlich ist es von Vorteil, dass das System 7 zur Spülgutidentifizierung ausgebildet ist, vorzugsweise automatisch oder wahlweise automatisch mindestens ein Merkmal eines im Einstellbereich 4 der Spülmaschine 1 aufgegebenen Spülgutteils zu erfassen, wobei das System 7 zur Spülgutidentifizierung ferner ausgebildet ist, anhand des mindestens einen im Einstellbereich 4 der Spülmaschine 1 erfassten Merkmals das entsprechende Spülgutteil 2 im Entnahmebereich 5 der Spülmaschine 1 wiederzuerkennen und vorzugsweise entsprechend zu kennzeichnen oder von anderen Spülgutteilen 2 im Entnahmebereich 5 zu individualisieren, herauszustellen oder zu separieren.

Insbesondere ist die zum dem erfindungsgemäßen Thekensystem 10 gehörende Spülmaschine 1 ausgebildet, aufgrund ihrer Bauform und Baugröße in den Thekenbereich z.B. eines Kaffeeshops integriert zu werden, so dass die schmutzige Tasse vom Kunden in einem Bereich vor der Theke in die Maschine gestellt werden kann, und die saubere Tasse dann nach erfolgtem Spülprozess vom Personal hinter der Theke 14 aus der Maschine entnommen werden kann, um diese dann direkt zum Wiederbefüllen gemäß der Kundenbestellung zu verwenden.

Der Entnahmebereich 5 der Spülmaschine 1 kann zusätzlich mit einer Art Transportband / Fördereinrichtung ausgestattet sein, mit welchem es möglich ist, das saubere Spülgut vom eigentlichen Entnahmebereich 5 in einen zusätzlichen Lagerbereich, z.B. neben der Spülmaschine 1 oder auf der anderen Seite der Kaffeemaschine 13, zu transportieren, um dadurch die Kapazität bzw. die max. mögliche Anzahl an Tassen und Gläser, welche im Umlauf sein können beliebig zu erhöhen, ohne hierzu die Größe der eigentlichen Spülmaschine 1 vergrößern zu müssen.

Insbesondere ist es in diesem Zusammenhang denkbar, dass das saubere Spülgut durch das zusätzliche Transportband/ Fördereinrichtung nicht in einen separaten Lagerbereich transportiert wird, sondern eine direkte Anbindung zu einer Kaffeemaschine 13 besteht (inkl. Drehung der Tasse um 180°, so dass die Öffnung nach oben zeigt), so dass die saubere Tasse direkt im Anschluss nach erfolgtem Spülprozess vollautomatisch mit dem Getränk gemäß der Kundenbestellung befüllt werden kann.

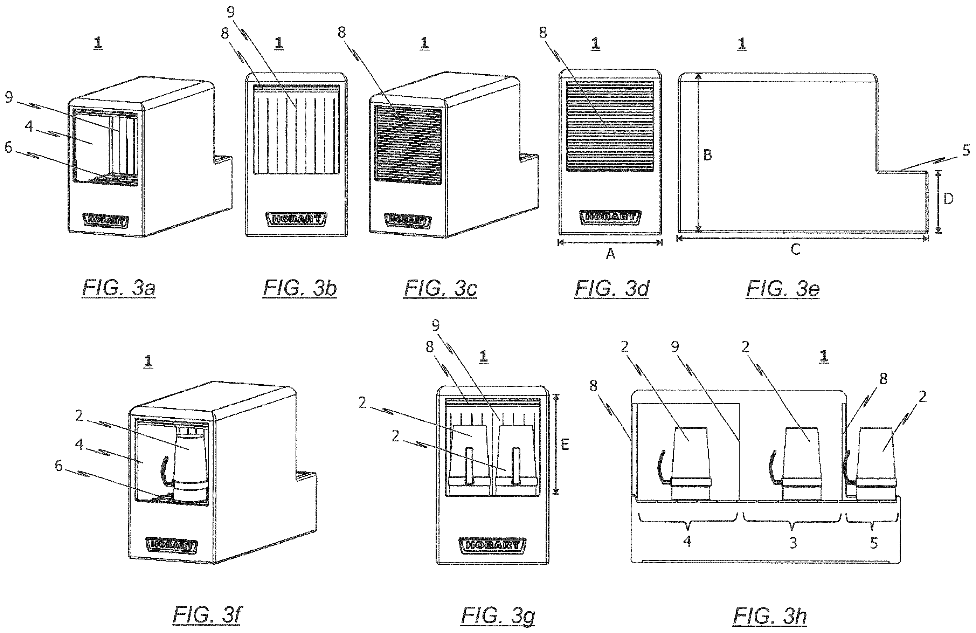

Nachfolgend werden unter Bezugnahme auf die Darstellungen in FIG. 3 bis FIG. 8 weitere Ausführungsformen der zum dem erfindungsgemäßen Thekensystem 10 gehörenden Spülmaschine 1 näher beschrieben.

Im Einzelnen sind diese Ausführungsformen jeweils als Auftischmaschinen ausgeführt, so dass diese problemlos auf Theke beispielsweise eines Kaffeeshops gestellt werden können. Die Ausführungsformen der zum dem erfindungsgemäßen Thekensystem 10 gehörenden Spülmaschinen 1 sind ausgebildet, chargenweise Spülgutteile 2 von dem Einstellbereich 4 durch die mindestens eine Behandlungszone 3 zu transportieren und dann die Spülgutteile 2 als gereinigte Spülgutteile 2 dem Entnahmebereich 5 zuzuführen.

Dabei kann die Spülmaschine 1 eine Tür 8, insbesondere Tambour-Tür, aufweisen, um eine Zugangsöffnung zum Einstellbereich 4 der Spülmaschine 1 bedarfsweise zu verschließen. Die Tür 8 kann manuell oder automatisch betätigbar sein. Bei einer automatischen Betätigung der Tür 8 kann dem Einstellbereich 4 eine Sensorik zugeordnet sein, welche ausgebildet ist, das Vorhandensein eines Spülgutteils 2 im Einstellbereich 4 zu erfassen, wobei die Sensorik beim Erfassen eines Spülgutteils 2 im Einstellbereich 4 eine Türmechanik ansteuert, um die Tür 8 zu schließen und ein Behandlungsprogramm der Spülmaschine 1 zu starten.

Die Spülmaschinen 1 gemäß den in FIG. 3 bis FIG. 8 gezeigten Ausführungsformen eignen sich insbesondere somit für Kaffeeshops, bei denen die Kunden ihre eigene Tasse mit bringen, wobei diese Tasse jedoch vor dem Befüllen beispielsweise mit einem Heißgetränk noch vor Ort gereinigt werden müssen. Dann kann die zu reinigende Tasse vereinzelt von dem Einstellbereich 4 durch die Behandlungszone 3 transportiert und dann dem Entnahmebereich 5 zugeführt werden.

Andererseits eignen sich die Spülmaschinen 1 auch für Situationen, bei denen gleichzeitig mehrere Spülgutteile 2 gereinigt werden müssen, wie es beispielsweise dann der Fall ist, wenn Spülgut 2 anfällt, welches nicht zu individualisieren ist. In diesem Fall können die zu reinigenden Spülgutteile 2 chargenweise durch die Behandlungszone 3 als Gruppe geleitet werden.

Bei den in FIG. 3 bis FIG. 8 gezeigten Ausführungsformen ist vorgesehen, dass die Transportvorrichtung 6 der Spülmaschine 1 eine Transportspur, insbesondere in Gestalt eines Transportbands, aufweist, wobei diese Transportspur ausgebildet ist, die Spülgutteile 2 vereinzelt oder paarweise durch die mindestens eine Behandlungskammer 3 der Spülmaschine 1 zu führen. Dabei ist die Breite der Transportspur entsprechend schmal gewählt. In bevorzugten Realisierungen der zum dem erfindungsgemäßen Thekensystem 10 gehörenden Spülmaschine 1 weist die Transportspur eine effektive Breite von vorzugsweise maximal 30 cm und vorzugsweise von maximal 15 cm auf.

Die in FIG. 3 bis FIG. 8 gezeigten Ausführungsformen der zum dem erfindungsgemäßen Thekensystem 10 gehörenden Spülmaschine 1 weisen eine Steuereinrichtung auf, welche ausgebildet ist, die Transportvorrichtung 6 derart anzusteuern, dass mit der Transportvorrichtung 6 die zu reinigenden Spülgutteile 2 diskontinuierlich von dem Einstellbereich 4 der Spülmaschine 1 durch die mindestens eine Behandlungszone 3 zu dem Entnahmebereich 5 der Spülmaschine 1 transportiert werden.

Mit Hilfe der Transportvorrichtung 6 werden dabei die zu reinigenden Spülgutteile 2 von dem Einstellbereich 4 in die mindestens eine Behandlungszone 3 transportiert, wobei dann die Transportvorrichtung 6 stoppt und die Spülgutteile 2 ortsfest in der Behandlungszone 3 gereinigt (Waschphase und Klarspülphase bzw. optional anschließende Trocknungsphase) gereinigt werden, wobei danach mit Hilfe der Transportvorrichtung 6 das gereinigte Spülgut 2 zum Entnahmebereich 5 transportiert wird.

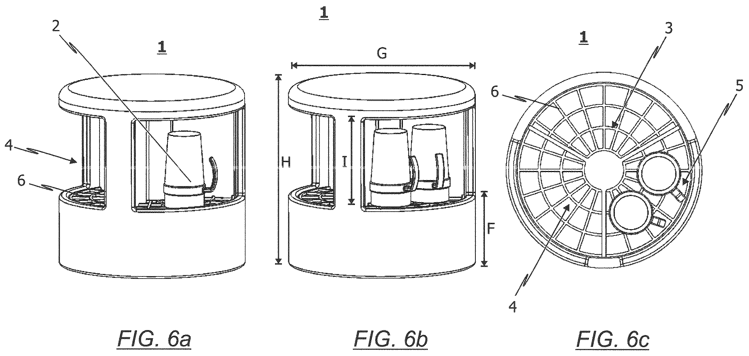

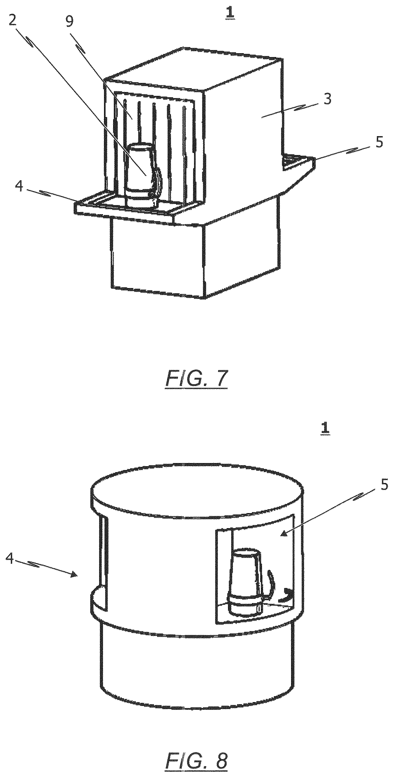

In FIG. 6 und FIG. 8 ist eine Ausführungsform der zum dem erfindungsgemäßen Thekensystem 10 gehörenden Spülmaschine 1 gezeigt, bei welcher als Transportvorrichtung 6 eine Karussell-Fördereinrichtung zum Einsatz. Als Karussell-Fördereinrichtung eignet sich beispielsweise eine Drehscheibe, um eine zirkulare Förderung des Spülguts 2 zu ermöglichen.

Die Zugangsöffnung der zum dem erfindungsgemäßen Thekensystem 10 gehörenden Spülmaschine 1 weist vorzugsweise eine Höhe von maximal 300 mm und eine Breite von maximal 500 mm und vorzugsweise von maximal 350 mm auf.

Die bevorzugten Abmessungen der in FIG. 3 bis FIG. 6 gezeigten Spülmaschinen 1 sind in der nachfolgenden Tabelle zusammengefasst:

| | | |
|---|---|---|
| **A** | 140 bis 340 mm | vorzugsweise 200 bis 280 mm |
| **B** | 285 bis 485 mm | vorzugsweise 345 bis 425 mm |
| **C** | 400 bis 850 mm | vorzugsweise 500 bis 600 mm |
| **D** | 100 bis 250 mm | vorzugsweise 120 bis 200 mm |
| **E** | 150 bis 300 mm | vorzugsweise 180 bis 240 mm |
| **F** | 100 bis 250 mm | vorzugsweise 120 bis 200 mm |
| **G** | 300 bis 650 mm | vorzugsweise 350 bis 550 mm |
| **H** | 285 bis 485 mm | vorzugsweise 345 bis 425 mm |
| **I** | 150 bis 300 mm | vorzugsweise 180 bis 240 mm |

Die Spülmaschine 1 ist vorzugsweise ferner mit einem Spritzschutz 9 versehen, um den Einstellbereich 4 von der mindestens einen Behandlungskammer 3 abzuschirmen und insbesondere auch den Austritt von Wrasen zu verhindern.

In FIG. 7 ist schematisch und in einer isometrischen Ansicht eine weitere Ausführungsvariante einer zu dem erfindungsgemäßen Thekensystem 10 gehörenden Spülmaschine 1 gezeigt.

Im Wesentlichen entspricht die in FIG. 7 gezeigte Spülmaschine 1 in struktureller und funktioneller Hinsicht den zuvor beschriebenen Spülmaschinen 1, wobei allerdings bei der in FIG. 7 gezeigten Ausführungsvariante vorgesehen ist, dass zumindest ein Teil der Spülmaschine 1 unterhalb der Thekenebene angeordnet ist, wie beispielsweise der untere Bereich der Spülmaschine 1, in welchem die Pumpen und der mindestens eine Waschtank der Spülmaschine 1 aufgenommen ist.

Eine alternative Ausführungsform einer solchen in der Theke des Thekensystems 10 zumindest teilweise integrierbaren Spülmaschine 1 ist schematisch und in einer isometrischen Ansicht in FIG. 8 gezeigt. Diese Spülmaschine 1 umfasst eine als Karussell ausgebildete Transportvorrichtung 6.

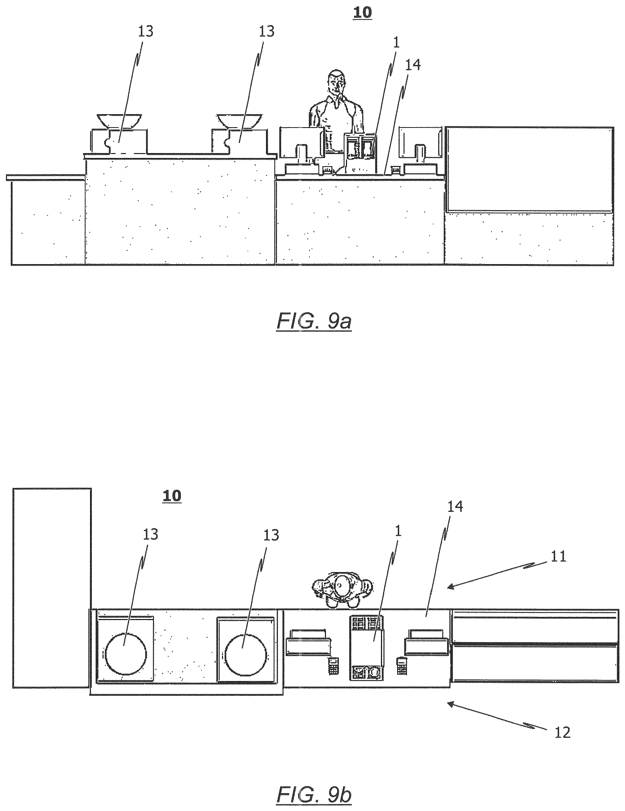

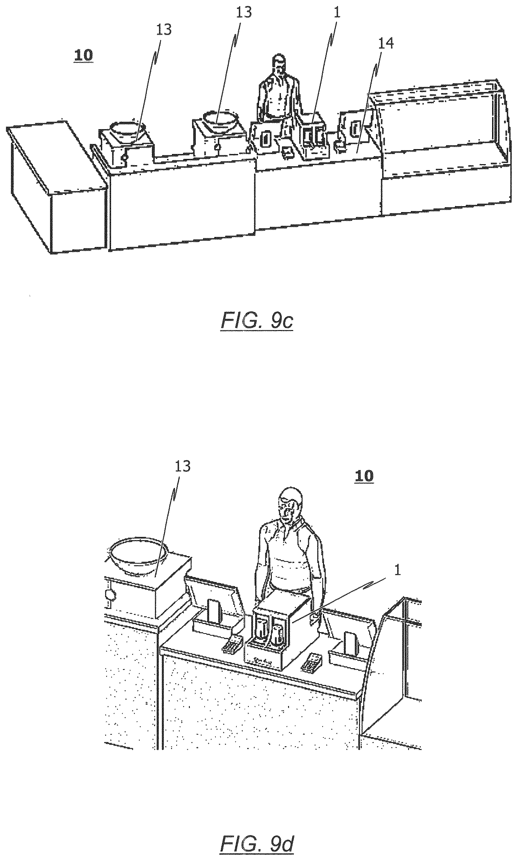

In FIG. 9a bis FIG. 9d sind in unterschiedlichen Ansichten und jeweils schematisch Ausführungsformen des erfindungsgemäßen Thekensystems 10 gezeigt. Das Thekensystem 10 dieser Ausführungsform umfasst eine Spülmaschine 1, bei welcher der Einstellbereich 4 und der Entnahmebereich 5 an gegenüberliegenden Seiten der Spülmaschine 1 vorgesehen sind.

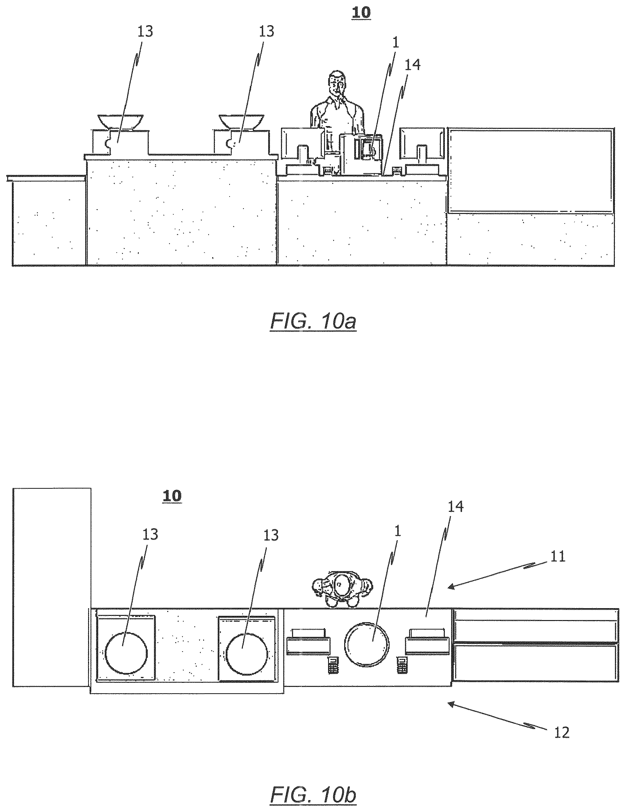

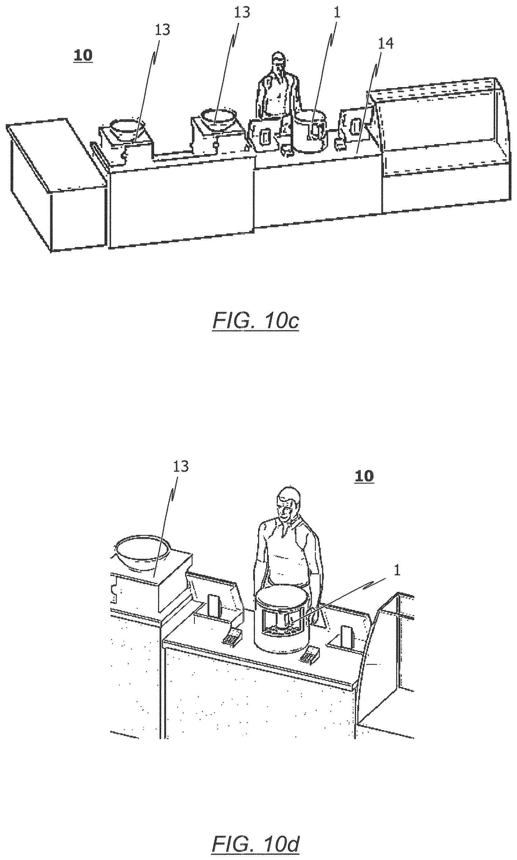

Hingegen ist bei dem schematisch in FIG. 10a bis 10d gezeigten Thekenkonzept eine Spülmaschine 1 vorgesehen, die eine als Karussell ausgebildete Transportvorrichtung 6 aufweist.

Die Erfindung ist nicht auf die in den Zeichnungen gezeigten Ausführungsformen beschränkt, sondern ergibt sich aus einer Zusammenschau sämtlicher hierin offenbarter Merkmale.

## Patentansprüche

1. Thekensystem (10) zur Übergabe von insbesondere zumindest teilweise unverpackten Lebensmitteln, wobei das Thekensystem (10) einen dem Thekenpersonal zugeordneten ersten Bereich (11) und einen hiervon getrennten und dem Kunden zugeordneten zweiten Bereich (12) aufweist, und wobei das Thekensystem (10) eine Theke (14) und eine Spülmaschine (1) zum Reinigen von Spülgutteilen (2) insbesondere in Gestalt von Trinkbechern, Tassen, Gläsern, Schalen oder Tellern aufweist, wobei die Spülmaschine (1) mindestens eine Behandlungszone (3) und mindestens eine Transportvorrichtung (6) zum Transportieren der zu reinigenden Spülgutteile (2) von einem Einstellbereich (4) der Spülmaschine (1) durch die mindestens eine Behandlungszone (3) der Spülmaschine (1) zu einem Entnahmebereich (5) der Spülmaschine (1) aufweist, wobei der Einstellbereich (4) der Spülmaschine (1) von dem zweiten Bereich (12) des Thekensystems (10) und der Entnahmebereich (5) der Spülmaschine (1) von dem ersten Bereich (11) des Thekensystems (10) zugänglich ist, und wobei der erste Bereich (11) des Thekensystems (10) über die Theke (14) von dem zweiten Bereich (12) des Thekensystems (10) getrennt ist, wobei die Spülmaschine (1) eine Steuereinrichtung aufweist, welche ausgebildet ist, die mindestens eine Transportvorrichtung (6) der Spülmaschine (1) derart anzusteuern, dass mit der mindestens einen Transportvorrichtung (6) die zu reinigenden Spülgutteile (2) derart diskontinuierlich von dem Einstellbereich (4) der Spülmaschine (1) durch die mindestens eine Behandlungszone (3) zu dem Entnahmebereich (5) der Spülmaschine (1) transportiert werden, dass die zu reinigenden Spülgutteile (2) von dem Einstellbereich (4) in die mindestens eine Behandlungszone (3) transportiert werden, wobei dann die Transportvorrichtung (6) stoppt und die Spülgutteile (2) ortsfest in der Behandlungszone (3) gereinigt werden, wobei danach mit Hilfe der Transportvorrichtung (6) die gereinigten Spülgutteile (2) zu dem Entnahmebereich (5) transportiert werden, und wobei die mindestens eine Behandlungszone (3) ausgebildet ist, zeitlich gesehen nacheinander mindestens ein über die mindestens eine Transportvorrichtung (6) der mindestens einen Behandlungszone (3) zugeführtes Spülgutteil einer Waschbehandlung und einer nachgeordneten Klarspülbehandlung sowie optional einer der Klarspülbehandlung nachgeordneten Trocknung zu unterwerfen.

2. Thekensystem (10) nach Anspruch 1,
wobei der Einstellbereich (4) der Spülmaschine (1) von dem Entnahmebereich (5) der Spülmaschine (1) separiert ist, wobei insbesondere der Einstellbereich (4) der Spülmaschine (1) und der Entnahmebereich (5) der Spülmaschine (1) in oder bei gegenüberliegenden Endbereichen der Spülmaschine (1) ausgebildet sind, und/oder wobei insbesondere der Einstellbereich (4) der Spülmaschine (1) von dem Entnahmebereich (5) der Spülmaschine (1) getrennt ist.

3. Thekensystem (10) nach Anspruch 1 oder 2,
wobei das Thekensystem (10) eine den ersten Bereich (11) des Thekensystems (10) von dem zweiten Bereich (12) des Thekensystems (10) trennende Theke (14) aufweist, wobei die Theke (14) einen ersten Bereich zum Aufnehmen der Spülmaschine (1) und mindestens einen neben dem ersten Bereich angeordneten zweiten Bereich aufweist.

4. Thekensystem (10) nach Anspruch 3,
wobei der Einstellbereich (4) der Spülmaschine (1) in der gleichen horizontalen Ebene liegt wie der Entnahmebereich (5) der Spülmaschine (1), wobei die horizontale Ebene oberhalb oder unterhalb der Thekenebene liegt.

5. Thekensystem (10) nach einem der Ansprüche 1 bis 4,
wobei die Transportvorrichtung (6) mindestens eine Transportspur, insbesondere in Gestalt eines Transportbands, aufweist, wobei die mindestens eine Transportspur eine effektive Breite von vorzugsweise maximal 30 cm und insbesondere von maximal 15 cm aufweist.

6. Thekensystem (10) nach einem der Ansprüche 1 bis 5,
wobei die Spülmaschine (1) mindestens eine erste Behandlungszone (3) aufweist, welche als Waschzone ausgebildet ist, und mindestens eine der mindestens einen ersten Behandlungszone (3) - in Transportrichtung der Spülgutteile (2) gesehen - nachgeschaltete zweite Behandlungszone (3) aufweist, welche als Spülzone, insbesondere Klarspülzone, ausgebildet ist, wobei optional die Spülmaschine (1) ferner mindestens eine dritte Behandlungszone (3) aufweist, welche als Trocknungszone ausgebildet und der mindestens einen zweiten Behandlungszone (3) - in Transportrichtung der Spülgutteile (2) gesehen - nachgeschaltet ist.

7. Thekensystem (10) nach einem der Ansprüche 1 bis 6,
wobei der mindestens einen Behandlungszone (3) der Spülmaschine (1) eine Absaugeinrichtung zum Absaugen von Wrasen zugeordnet ist; und/ oder
wobei der mindestens einen Behandlungszone (3) der Spülmaschine (1) ein Spritzschutz zugeordnet ist zum Verhindern eines Austritts von Wrasen und/oder Flüssigkeit aus der mindestens einen Behandlungszone (3).

8. Thekensystem (10) nach einem der Ansprüche 1 bis 7,
wobei das Thekensystem (10) eine Transportvorrichtung (6) aufweist zum vorzugsweise automatischen und insbesondere bedarfsweisen Transportieren eines gereinigten Spülgutteils vom Entnahmebereich (5) der Spülmaschine (1) zu einem Dispenser, insbesondere zu einem Dispenser für ein Kalt- oder Warmgetränk eines Getränkeautomaten oder einer Kaffeemaschine, wobei die Spülmaschine (1) insbesondere ferner einer Einrichtung zum Positionieren und/oder Ausrichten des Spülgutteils mit Bezug auf den Dispenser aufweist.

9. Thekensystem (10) nach einem der Ansprüche 1 bis 8,
wobei die Spülmaschine (1) insbesondere als Untertisch- oder Auftischmaschine ausgeführt und eine an eine Thekengröße angepasste Abmessung aufweist, wobei die Grundfläche der Spülmaschine (1) vorzugsweise eine Abmessung von maximal 700 mm x 1.000 mm und vorzugsweise maximal 500 mm x 600 mm und noch bevorzugter maximal 350 mm x 600 mm aufweist.

10. Thekensystem (10) nach einem der Ansprüche 1 bis 9,
wobei im Thekensystem (10) ein vorzugsweise insbesondere bedarfsweise mit dem Frischwassernetz strömungsmäßig verbindbarer Frischwassertank integriert ist zur Frischwasserversorgung der Spülmaschine (1); und/oder
wobei im Thekensystem (10) ein vorzugsweise insbesondere bedarfsweise mit dem Abwassernetz strömungsmäßig verbindbarer Abwassertank integriert ist zum Zwischenspeichern von beim Betrieb der Spülmaschine (1) anfallendem Abwasser, wobei dem Abwassertank vorzugsweise ein Wärmetauschersystem zugeordnet ist zum Wiederverwenden von zumindest einem Teil der thermischen Energie des beim Betrieb der Spülmaschine (1) anfallenden Abwassers.

11. Thekensystem (10) nach einem der Ansprüche 1 bis 10,
wobei die Spülmaschine (1) insbesondere eine Tür (8), vorzugsweise in Gestalt einer Tambour-Tür aufweist zum bedarfsweisen Verschließen einer Zugangsöffnung zum Einstellbereich (4) der Spülmaschine (1), wobei die Zugangsöffnung eine Höhe von maximal 300 mm und vorzugsweise von maximal 250 mm und eine Breite von maximal 500 mm und vorzugsweise von maximal 350 mm aufweist, wobei die Spülmaschine (1) vorzugsweise eine erste Tür (8), vorzugsweise in Gestalt einer Tambour-Tür aufweist zum bedarfsweisen Verschließen der Zugangsöffnung zum Einstellbereich (4) der Spülmaschine (1) und vorzugsweise ferner eine zweite Tür (8), vorzugsweise in Gestalt einer Tambour-Tür aufweist zum bedarfsweisen Verschließen einer Zugangsöffnung zum Entnahmebereich (5) der Spülmaschine (1).

## Claims

1. A counter system (10) for the transfer of in particular at least partially unpacked foods, wherein the counter system (10) comprises a first region (11) associated with the counter personnel and a second region (12) separate therefrom and associated with the customer, and wherein the counter system (10) comprises a counter (14) and a dishwasher (1) for cleaning washware (2), in particular in the form of drinking cups, teacups, glasses, bowls, or plates, wherein the dishwasher (1) comprises at least one treatment zone (3) and at least one conveyor apparatus (6) for transporting the washware (2) to be cleaned from an insertion region (4) of the dishwasher (1) through the at least one treatment zone (3) of the dishwasher (1) to a removal region (5) of the dishwasher (1), wherein the insertion region (4) of the dishwasher (1) is accessible from the second region (12) of the counter system (10), and the removal region (5) of the dishwasher (1) is accessible from the first region (11) of the counter system (10), and wherein the first region (11) of the counter system (10) is separated from the second region (12) of the counter system (10) via the counter (14), wherein the dishwasher (1) comprises a control device, which is configured so as to control the at least one conveyor apparatus (6) of the dishwasher (1) in such a way that, with the at least one conveyor apparatus (6), the washware (2) to be cleaned is transported discontinuously from the insertion region (4) of the dishwasher (1) through the at least one treatment zone (3) to the removal region (5) of the dishwasher (1) in such a way that the washware (2) to be cleaned is transported from the insertion region (4) into the at least one treatment zone (3), wherein the conveyor apparatus (6) then stops and the washware (2) is cleaned while remaining stationary in the treatment zone (3), wherein thereafter, with the aid of the conveyor apparatus (6), the cleaned washware (2) is transported to the removal region (5), and wherein the at least one treatment zone (3) is configured such that, in a timed manner, it subjects a piece of washware that has been supplied via the at least one conveyor apparatus (6) of the at least treatment zone (3) to a washing treatment and a downstream rinsing treatment as well as optionally a drying situated downstream of the rinsing treatment.

2. The counter system (10) according to claim 1,
wherein the insertion region (4) of the dishwasher (1) is separated from the removal region (5) of the dishwasher (1), wherein the insertion region (4) of the dishwasher (1) and the removal region (5) of the dishwasher (1) are configured in particular in or at opposite end regions of the dishwasher (1), and/or wherein the insertion region (4) of the dishwasher (1) is separated in particular from the removal region (5) of the dishwasher (1).

3. The counter system (10) according to claim 1 or 2,
wherein the counter system (10) comprises a counter (14) separating the first region (11) of the counter system (10) from the second region (12) of the counter system (10), wherein the counter (14) comprises a first region for receiving the dishwasher (1) and at least one second region arranged adjacent to the first region.

4. The counter system (10) according to claim 3,
wherein the insertion region (4) of the dishwasher (1) lies in the same horizontal plane as the removal region (5) of the dishwasher (1), wherein the horizontal plane lies above or below the counter plane.

5. The counter system (10) according to any one of claims 1 to 4,
wherein the conveyor apparatus (6) comprises at least one conveyor track, in particular in the form of a conveyor belt, wherein the at least one conveyor track has an effective width of preferably a maximum of 30 cm and in particular a maximum of 15 cm.

6. The counter system (10) according to any one of claims 1 to 5,
wherein the dishwasher (1) comprises at least one first treatment zone (3), which is configured as a washing zone and comprises at least one second treatment zone (3) positioned downstream of the at least one first treatment zone (3) when viewed in the direction of conveyance of the washware (2) and configured as a purging zone, in particular a rinsing zone, wherein the dishwasher (1) further optionally comprises at least one third treatment zone (3) configured as a drying zone and positioned downstream of the at least one second treatment zone (3) when viewed in the direction of conveyance of the washware (2).

7. The counter system (10) according to any one of claims 1 to 6,
wherein the at least one treatment zone (3) of the dishwasher (1) is associated with an exhaust device for extracting vapors; and/or
wherein the at least one treatment zone (3) of the dishwasher (1) is associated with a splash guard to prevent leakage of vapors and/or liquid from the at least one treatment zone (3).

8. The counter system (10) according to any one of claims 1 to 7,
wherein the counter system (10) comprises a conveyor apparatus (6) for preferably automated and in particular as-needed transport of a cleaned piece of washware from the removal region (5) of the dishwasher (1) to a dispenser, in particular to a dispenser for a cold or hot drink of a beverage dispenser or coffee maker, wherein the dishwasher (1) in particular further comprises a device for positioning and/or orienting the washware in relation to the dispenser.

9. The counter system (10) according to any one of claims 1 to 8,
wherein the dishwasher (1) is configured in particular as an under-counter or counter-top machine and has dimensions adapted to a counter size, wherein the base surface of the dishwasher (1) preferably has dimensions of a maximum of 700 mm x 1,000 mm, preferably a maximum of 500 mm x 600 mm, and even more preferably a maximum of 350 mm x 600 mm.

10. The counter system (10) according to any one of claims 1 to 9,
wherein a fresh water tank is integrated in the counter system (10) and can be flowably connected to the fresh water network, preferably in particular as needed, for supplying fresh water to the dishwasher (1); and/or wherein a waste tank is integrated in the counter system (10) and can be connected to the sewage system, preferably in particular as needed, for the intermediate storage of waste water produced during operation of the dishwasher (1),
wherein the waste tank is preferably associated with a heat exchange system for reusing at least a portion of the thermal energy of the waste water that arises during operation of the dishwasher (1).

11. The counter system (10) according to any one of claims 1 to 10,
wherein the dishwasher (1) in particular comprises a door (8), preferably in the form of a Tambour door, for closing an access opening to the insertion region (4) of the dishwasher (1) as needed, wherein the access opening has a height of a maximum of 300 mm and preferably a maximum of 250 mm and a width of a maximum of 500 mm and preferably a maximum of 350 mm, wherein the dishwasher (1) preferably comprises a first door (8), preferably in the form of a Tambour door, for closing the access opening to the insertion region (4) of the dishwasher (1) as needed, and preferably also a second door (8), preferably in the form of a Tambour door, for closing an access opening to the removal region (5) of the dishwasher (1) as needed.

## Revendications

1. Système de comptoir (10) pour le transfert d'aliments, en particulier au moins partiellement non emballés, dans lequel le système de comptoir (10) comprend une première région (11) associée au personnel de comptoir et une deuxième région (12) séparée de celle-ci et associée au client, et dans lequel le système de comptoir (10) comprend un comptoir (14) et un lave-vaisselle (1) pour nettoyer la vaisselle (2), en particulier sous la forme de gobelets, tasses à thé, verres, bols ou assiettes, dans lequel le lave-vaisselle (1) comprend au moins une zone de traitement (3) et au moins un appareil convoyeur (6) pour transporter la vaisselle (2) à nettoyer depuis une région d'insertion (4) du lave-vaisselle (1) à travers l'au moins une zone de traitement (3) du lave-vaisselle (1) jusqu'à une région de retrait (5) du lave-vaisselle (1), dans lequel la région d'insertion (4) du lave-vaisselle (1) est accessible depuis la deuxième région (12) du système de comptoir (10), et la région de retrait (5) du lave-vaisselle (1) est accessible depuis la première région (11) du système de comptoir (10), et dans lequel la première région (11) du système de comptoir (10) est séparée de la deuxième région (12) du système de comptoir (10) par l'intermédiaire du comptoir (14), dans lequel le lave-vaisselle (1) comprend un dispositif de commande, qui est configuré de manière à commander l'au moins un appareil convoyeur (6) du lave-vaisselle (1) de telle sorte que, avec l'au moins un appareil convoyeur (6), la vaisselle (2) à nettoyer est transportée de manière discontinue depuis la région d'insertion (4) du lave-vaisselle (1) à travers l'au moins une zone de traitement (3) jusqu'à la région de retrait (5) du lave-vaisselle (1) de telle sorte que la vaisselle (2) à nettoyer est transportée depuis la région d'insertion (4) jusque dans l'au moins une zone de traitement (3), dans lequel l'appareil convoyeur (6) s'arrête ensuite et la vaisselle (2) est nettoyée tout en restant stationnaire dans la zone de traitement (3), dans lequel, par la suite, à l'aide de l'appareil convoyeur (6), la vaisselle (2) nettoyée est transportée jusqu'à la région de retrait (5), et dans lequel l'au moins une zone de traitement (3) est configurée de telle sorte que, d'une manière temporisée, elle soumet un article de vaisselle qui a été alimenté via l'au moins un appareil convoyeur (6) de l'au moins une zone de traitement (3) vers un traitement de lavage et à un traitement de rinçage en aval ainsi que, facultativement, un séchage situé en aval du traitement de rinçage.

2. Système de comptoir (10) selon la revendication 1,
dans lequel la région d'insertion (4) du lave-vaisselle (1) est séparée de la région de retrait (5) du lave-vaisselle (1), dans lequel la région d'insertion (4) du lave-vaisselle (1) et la région de retrait (5) du lave-vaisselle (1) sont configurées en particulier dans ou au niveau de régions d'extrémité opposées du lave-vaisselle (1), et/ou dans lequel la région d'insertion (4) du lave-vaisselle (1) est séparée en particulier de la région de retrait (5) du lave-vaisselle (1).

3. Système de comptoir (10) selon la revendication 1 ou 2,
dans lequel le système de comptoir (10) comprend un comptoir (14) séparant la première région (11) du système de comptoir (10) de la deuxième région (12) du système de comptoir (10), dans lequel le comptoir (14) comprend une première région pour recevoir le lave-vaisselle (1) et au moins une deuxième région agencée adjacente à la première région.

4. Système de comptoir (10) selon la revendication 3,
dans lequel la région d'insertion (4) du lave-vaisselle (1) se trouve dans le même plan horizontal que la région de retrait (5) du lave-vaisselle (1), dans lequel le plan horizontal se trouve au-dessus ou au-dessous du plan de comptoir.

5. Système de comptoir (10) selon l'une quelconque des revendications 1 à 4,
dans lequel l'appareil convoyeur (6) comprend l'au moins une piste de convoyeur, en particulier sous la forme d'une bande transporteuse, dans lequel l'au moins une piste de convoyeur a une largeur effective de préférence au maximum de 30 cm et en particulier au maximum de 15 cm.

6. Système de comptoir (10) selon l'une quelconque des revendications 1 à 5,
dans lequel le lave-vaisselle (1) comprend l'au moins une première zone de traitement (3), qui est configurée comme une zone de lavage et comprend au moins une deuxième zone de traitement (3) positionnée en aval de l'au moins une première zone de traitement (3) lorsqu'elle est vue dans la direction de transport de la vaisselle (2) et configurée comme une zone de purge, en particulier une zone de rinçage, dans lequel le lave-vaisselle (1) comprend en outre facultativement au moins une troisième zone de traitement (3) configurée en tant que zone de séchage et positionnée en aval de l'au moins une deuxième zone de traitement (3) lorsqu'elle est vue dans la direction de transport de la vaisselle (2).

7. Système de comptoir (10) selon l'une quelconque des revendications 1 à 6,
dans lequel l'au moins une zone de traitement (3) du lave-vaisselle (1) est associée à un dispositif d'évacuation pour extraire des vapeurs ; et/ou
dans lequel l'au moins une zone de traitement (3) du lave-vaisselle (1) est associée à une protection contre les éclaboussures pour empêcher les fuites de vapeurs et/ou de liquide depuis l'au moins une zone de traitement (3).

8. Système de comptoir (10) selon l'une quelconque des revendications 1 à 7,
dans lequel le système de comptoir (10) comprend un appareil convoyeur (6) pour un transport, de préférence automatisé et en particulier selon les besoins, d'un article de vaisselle nettoyé depuis la région de retrait (5) du lave-vaisselle (1) vers un distributeur, en particulier vers un distributeur d'une boisson froide ou chaude d'un distributeur de boissons ou d'une cafetière, dans lequel le lave-vaisselle (1) comprend en outre en particulier un dispositif pour positionner et/ou orienter l'article de vaisselle par rapport au distributeur.

9. Système de comptoir (10) selon l'une quelconque des revendications 1 à 8,
dans lequel le lave-vaisselle (1) est configuré en particulier comme une machine sous-comptoir ou de comptoir et a des dimensions adaptées à une taille de comptoir, dans lequel la surface de base du lave-vaisselle (1) a de préférence des dimensions d'un maximum de 700 mm x 1 000 mm, de préférence d'un maximum de 500 mm x 600 mm, et de manière encore davantage préférée d'un maximum de 350 mm x 600 mm.

10. Système de comptoir (10) selon l'une quelconque des revendications 1 à 9,
dans lequel un réservoir d'eau claire est intégré dans le système de comptoir (10) et peut être raccordé fluidiquement au réseau d'eau claire, de préférence en particulier selon les besoins, pour alimenter de l'eau fraîche vers le lave-vaisselle (1) ; et/ou dans lequel un réservoir de déchets est intégré dans le système de comptoir (10) et peut être raccordé au réseau d'égouts, de préférence en particulier selon les besoins, pour le stockage intermédiaire des eaux usées produites pendant le fonctionnement du lave-vaisselle (1), dans lequel le réservoir de déchets est de préférence associé à un système d'échange de chaleur pour réutiliser au moins une portion de l'énergie thermique des eaux usées qui se produit pendant le fonctionnement du lave-vaisselle (1).

11. Système de comptoir (10) selon l'une quelconque des revendications 1 à 10,
dans lequel le lave-vaisselle (1) comprend en particulier une porte (8), de préférence sous la forme d'une porte à tambour, pour fermer une ouverture d'accès à la région d'insertion (4) du lave-vaisselle (1) selon les besoins, dans lequel l'ouverture d'accès a une hauteur d'un maximum de 300 mm et de préférence un maximum de 250 mm et une largeur d'un maximum de 500 mm et de préférence un maximum de 350 mm, dans lequel le lave-vaisselle (1) comprend de préférence une première porte (8), de préférence sous la forme d'une porte à tambour, pour fermer l'ouverture d'accès à la région d'insertion (4) du lave-vaisselle (1) selon les besoins, et de préférence également une deuxième porte (8), de préférence sous la forme d'une porte à tambour, pour fermer une ouverture d'accès à la région de retrait (5) du lave-vaisselle (1) selon les besoins.
